(19) **Europäisches Patentamt / European Patent Office / Office européen des brevets**

(11) **EP 4 552 718 A1**

(12) # EUROPEAN PATENT APPLICATION
published in accordance with Art. 153(4) EPC

(43) Date of publication:
**14.05.2025 Bulletin 2025/20**

(21) Application number: **23835627.3**

(22) Date of filing: **10.07.2023**

(51) International Patent Classification (IPC):
**B01D 19/04** (2006.01)   **C09D 201/00** (2006.01)
**C09D 7/63** (2018.01)   **C09D 7/65** (2018.01)

(52) Cooperative Patent Classification (CPC):
**B01D 19/04; C09D 7/63; C09D 7/65; C09D 201/00**

(86) International application number:
**PCT/JP2023/025417**

(87) International publication number:
**WO 2024/010096 (11.01.2024 Gazette 2024/02)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.07.2022 JP 2022110840**

(71) Applicant: **Kusumoto Chemicals, Ltd.
Tokyo 101-0047 (JP)**

(72) Inventors:
• **SATAKE, Hideki
Soka-shi, Saitama 340-0004 (JP)**
• **NISHIYAMA, Hironori
Soka-shi, Saitama 340-0004 (JP)**
• **OIWA, Yasuhiro
Soka-shi, Saitama 340-0004 (JP)**
• **KADOWAKI, Kanji
Soka-shi, Saitama 340-0004 (JP)**
• **ONIZAWA, Tsunaki
Soka-shi, Saitama 340-0004 (JP)**
• **OGIWARA, Shunsuke
Soka-shi, Saitama 340-0004 (JP)**
• **WATANABE, Toshihiro
Soka-shi, Saitama 340-0004 (JP)**

(74) Representative: **Hasegawa, Kan
Patentanwaltskanzlei Hasegawa
Untere Hauptstraße 56
85354 Freising (DE)**

(54) **ANTIFOAMING AGENT COMPOSITION, AQUEOUS COATING COMPOSITION AND ARTICLE**

(57)    A defoamer composition which is capable of forming a coating film with excellent coating appearance, has excellent shear resistance, and does not impair overcoatability, an aqueous paint composition containing the defoamer composition, and an article coated with a coating agent containing the defoamer composition are provided. A defoamer composition for aqueous paints contains: a nonionic surfactant (A) having at least one hydrophilic moiety selected from the group consisting of an ethylene glycol moiety, a polyethylene glycol moiety and a polyhydric alcohol moiety in a molecule, the nonionic surfactant (A) having an HLB of 1 to 16; a polymer (B) which does not have the hydrophilic moiety in a molecule, the polymer (B) having an SP value of 7.5 to 12 and a weight-average molecular weight of 400 to 1,000,000; and organic solid fine particles (C) which are in a solid state in the defoamer composition at 25°C.

EP 4 552 718 A1

**Description**

[Technical Field]

The present invention relates to defoamer compositions, aqueous paint compositions and articles.

[Background Art]

In the field of aqueous paints, there has been an increasing emphasis on coating appearance. Air bubbles remaining in the coating film during coating significantly damage coating appearance, so with the recent trend to emphasize coating appearance, the performance required of defoamers added to paints is also increasing.

For example, a defoamer described in PTL 1 is proposed as a defoamer that can be used in applications that require high-quality appearance. Further, a silicone-type defoamer (see, e.g., PTL 2) and a compound-type defoamer (see, e.g., PTL 3) are examples of defoamers excellent in defoaming effect.

[Citation List]

[Patent Literature]

PTL 1: JP 4526584 B
PTL 2: JP 2001-212403 A
PTL 3: JP H01-6803 A

[Summary of Invention]

[Technical Problem]

In general, silicone-type defoamers are excellent in foam-breaking properties due to their extremely low surface tension, but the silicone component bleeds onto a surface of the coating film, causing cissing or impairing overcoatability. These adverse effects may not be seen in laboratory-scale tests or in actual coating processes in the short term, but even in such cases, a single problem can lead to significant losses in mass-production. For this reason, the blending of silicone-based materials in paints is often avoided, especially in cases where high-quality appearance is important, in coating systems with multilayer coating films and large coating systems such as line coating, and also, the use of silicone-type defoamers is avoided. On the other hand, compound-type defoamers contain fine particles having a hydrophobic surface, and have high defoaming properties due to this hydrophobic surface, and thus they are often used in the expectation of excellent defoaming effect.

Also, in order to improve functionality, recent aqueous paints often use materials that are difficult to disperse in water. Such materials may affect coating appearance if they are not sufficiently atomized or dispersed, so in recent years, the dispersion process has become longer and the shear force applied to the paint in the dispersion process has increased (high shear).

However, the compound-type defoamer described in PTL 3 and the defoamer described in PTL 1 may lose their defoaming properties in processes such as long-term dispersion and high-shear dispersion. Therefore, there is a need for defoamers having resistance to loss of defoaming properties due to a shear force being applied to the paint (hereinafter, referred to as "shear resistance"). Further, there are cases where the paint is stirred during use in order to prevent sedimentation and separation of components in the paint, and in such cases, a long-term shear resistance is required.

Moreover, the presence of fine particles in the compound-type defoamers may affect smoothness and gloss of the coating film.

The present invention has been made in view of the above circumstances, and provides a defoamer composition which is capable of forming a coating film with excellent coating appearance, has excellent shear resistance, and does not impair overcoatability, an aqueous paint composition containing the defoamer composition, and an article coated with a coating agent containing the defoamer composition.

[Solution to Problems]

As a result of intensive research to achieve the above object, the present inventors have found that a defoamer composition for aqueous paints can be provided which is capable of forming a coating film with excellent coating appearance, has excellent shear resistance, and does not impair overcoatability, by containing, as components of the defoamer composition, a nonionic surfactant having a hydrophilic moiety with a specific structure and an HLB within a specific range, a polymer having an SP value and weight-average molecular weight within specific ranges, and organic solid fine particles. The present invention has been made based on these findings.

That is, the present invention is a defoamer composition for aqueous paints, the defoamer composition containing: a nonionic surfactant (A) having at least one hydrophilic moiety selected from the group consisting of an ethylene glycol moiety, a polyethylene glycol moiety and a polyhydric alcohol moiety in a molecule, the nonionic surfactant (A) having an HLB of 1 to 16; a polymer (B) which does not have the hydrophilic moiety in a molecule, the polymer (B) having an SP value of 7.5 to 12 and a weight-average molecular weight of 400 to 1,000,000; and organic solid fine particles (C) which are in a solid state in the defoamer composition at 25°C.

In an aspect of the present invention, the nonionic surfactant (A) may be one or more selected from the group consisting of ethylene glycol aliphatic ethers, polyoxyalkylene aliphatic ethers, polyoxyalkylene aromatic ethers, polyoxyalkylene fatty acid esters, alkylene oxide addition derivatives of castor oil, alkylene oxide addition derivatives of hydrogenated castor oil, polyoxyalkylene polyhydric alcohol ethers, polyhydric alcohol fatty acid esters, alkylene oxide addition derivatives of polyhydric alcohol fatty acid esters, polyoxyethylene alkyl amides, acetylene glycol and derivatives thereof, alkylene oxide addition derivatives of acetylene glycol, polyoxyethylene-polyoxypropylene block copolymers and polyoxyethylene-polyoxypropylene-polyoxyethylene block copolymers.

In another aspect of the present invention, the polymer (B) may be one or more polymers selected from the group consisting of polyvinyl alkyl ethers, polybutadiene, polybutene, polyisoprene, polyalphaolefins, polyalkyl (meth)acrylates, copolymers of dibasic acid esters, poly(fatty acid vinyl esters), copolymers of alkyl (meth)acrylates and fatty acid vinyl esters, and polyalkylene glycol derivatives (the polyalkylene glycol derivatives not having any of the ethylene glycol moiety, the polyethylene glycol moiety and the polyhydric alcohol moiety, and having a weight-average molecular weight of 400 to 1,000,000).

In another aspect of the present invention, the organic solid fine particles (C) may be one or more solid fine particles selected from the group consisting of amide, urea, polyethylene, polyethylene oxide, acid-modified polyethylene and hydrogenated castor oil.

In this case, the amide is preferably a fatty acid diamide obtainable by reacting fatty acids selected from the group consisting of alkyl fatty acids and hydroxy fatty acids and containing at least one hydroxy fatty acid with diamines containing one or more diamines selected from the group consisting of alkylenediamines having 2 to 6 carbon atoms and m-xylylenediamines.

In another aspect of the present invention, the organic solid fine particles (C) preferably have a crystal aspect ratio of 1.1 to 100.

In another aspect of the present invention, the defoamer composition may further contain an organic medium (D) which does not have the hydrophilic moiety in a molecule, and which is liquid at 25°C and other than water, the organic medium (D) having a weight-average molecular weight of less than 400.

In this case, the organic medium (D) may be one or more selected from the group consisting of hydrocarbon oils, alcohols, glycol ethers and glycol esters.

In another aspect of the present invention, it is preferred that the defoamer composition does not contain a silicone compound.

Furthermore, the present invention is an aqueous paint composition containing the above-mentioned defoamer composition; and an aqueous resin.

Furthermore, the present invention is an article coated with a coating agent containing the above-mentioned defoamer composition.

[Advantageous Effects of Invention]

According to the present invention, due to containing a specific nonionic surfactant, a polymer and organic solid fine particles as components of a defoamer, it is possible to provide a defoamer composition which is capable of forming a coating film with excellent coating appearance, has excellent shear resistance, and does not impair overcoatability, an aqueous paint composition containing the defoamer composition, and an article coated with a coating agent containing the defoamer composition.

[Description of Embodiments]

In the following description, preferred embodiments of the present invention will be described in detail.

[Defoamer Composition]

A defoamer composition according to the present invention is an additive for suppressing generation of air bubbles caused by various surfactants contained in an aqueous paint, the defoamer composition containing, as essential components, a nonionic surfactant (A) having a hydrophilic moiety with a specific structure and an HLB within a specific range, a polymer (B) having an SP value and weight-average molecular weight within specific ranges, and organic solid fine particles (C). According to the present invention, it is possible to provide a defoamer composition for aqueous paints which is capable of forming a coating film with excellent coating appearance, has excellent shear resistance, and does not impair overcoatability.

The term "defoaming properties" as used in the present invention refers to the ability to eliminate air bubbles generated in the aqueous paint. The term "shear resistance" as used in the present invention refers to, as described above, the resistance to defoaming inactivation that occurs when a shear force is applied to the paint, in other words, the ability of the defoamer to suppress defoaming inactivation when a shear force is applied to the paint. Further, the term "overcoatability" as used in the present invention refers to either or both of the ability to apply a paint without causing cissing or the like when applying a paint (hereinafter, also referred to as a "topcoat") to a surface of an already applied coating film (hereinafter, also referred to as an "undercoat coating film") in a coating system formed of multiple layers, and the ability of not causing problems such as delamination between the topcoat coating film and the undercoat coating film. In general, evaluation of overcoatability is performed by preparing a multilayer coating film and assessing the adhesion of the topcoat coating film to the undercoat coating film, but simple evaluation can be performed by measuring a contact angle of a surface of the undercoat coating film. When evaluating using the contact angle, a topcoat paint is used as a liquid for contact angle evaluation, or especially if the topcoat paint is an aqueous paint, co-solvent (organic solvent blended in the paint), water containing co-solvent, or water alone is used as the liquid for contact angle evaluation. The smaller the contact angle of a droplet of the liquid for contact angle evaluation dropped on the undercoat coating film in the range of less than 90°, the higher the overcoatability is evaluated. In the following description, the essential components and the optional components contained in the defoamer composition according to the present invention will be described in detail.

(Nonionic Surfactant (A))

The nonionic surfactant (A) according to the present invention is a component for imparting defoaming properties, and is added to improve permeation of the defoamer into the foam lamella. Further, the nonionic surfactant (A) also serves as a stabilizer that stabilizes defoaming droplets containing organic solid fine particles (C) or stabilizes the organic solid fine particles (C) themselves in the aqueous paint. The surfactant refers to an organic functional agent having the properties of lowering the surface tension of a liquid. For example, hydrogenated castor oil, which is a triglyceride of fatty acids, is not a surfactant, and is not included in the nonionic surfactant (A).

The nonionic surfactant (A) according to the present invention includes a nonionic surfactant having at least one hydrophilic moiety selected from the group consisting of an ethylene glycol moiety, a polyethylene glycol moiety and a polyhydric alcohol moiety in the molecule, the nonionic surfactant (A) having an HLB of 1 to 16.

The "hydrophilic moiety" is defined as one or more moieties selected from the group consisting of an ethylene glycol moiety, a polyethylene glycol moiety and a polyhydric alcohol moiety present in the molecule of the nonionic surfactant (A). The ethylene glycol moiety is an oxyethylene group represented by $-CH_2CH_2O-$. The polyethylene glycol moiety is a polyoxyethylene group represented by $-(CH_2CH_2O)_n-$ ($n \geq 2$). The polyhydric alcohol moiety refers to, in the case where the nonionic surfactant (A) is a derivative of a divalent or higher alcohol, a molecular substructure derived from an organic group having two or more hydroxyl groups, excluding monovalent substituents composed only of a hydrocarbon with one or more carbon atoms and acyl groups. The polyhydric alcohol moiety also does not fall under alkylene glycol or polyalkylene glycol. When the "hydrophilic moiety" is composed only of ethylene glycol or diethylene glycol, the hydrophobic moiety (portion of the molecule of the nonionic surfactant (A) other than the "hydrophilic moiety") is limited to those having 9 or more carbon atoms.

Further, when the HLB of the nonionic surfactant (A) is less than 1, the miscibility with water is poor, which may cause problems such as separation of the nonionic surfactant component itself in the aqueous paint. On the other hand, when the HLB of the nonionic surfactant (A) is more than 16, the hydrophilicity is too high and the other components of the defoamer cannot be sufficiently stabilized, which may cause problems such as generation of aggregates and separation of other deforming components in the aqueous paint.

The known mechanism of action of defoamers is that defoamer droplets, which have poor miscibility with water-based media, enter the foam lamella, and when the droplets penetrate the foam lamella, the droplets cause the foam to break. This indicates that highly hydrophobic substances, that is, substances with low HLB values, are potentially excellent in foam-breaking properties. Meanwhile, the defoamer droplets are required to be large enough to enter the foam lamella. Accordingly, a certain degree of hydrophilicity is required, and the higher the hydrophilicity, the higher the dispersibility in water, and thus the smaller the droplets. On the other hand, the lower the hydrophilicity, the larger the droplets. If the droplets have too small a size, they cannot penetrate the foam lamella, and if the droplets have too large a size, they cannot enter the foam lamella, and in either case, the defoaming function is not achieved. Therefore, there are appropriate HLB ranges for controlling the droplet size.

The nonionic surfactant (A), when in an appropriate HLB range, is desirable since the nonionic surfactant itself has defoaming properties. From this viewpoint, the HLB of the nonionic surfactant (A) is preferably 2 to 16, and more preferably 3 to 16.

Moreover, the nonionic surfactant (A) has a function of homogenizing the other components in the defoamer composition of the present invention, i.e., the polymer (B), the organic solid fine particles (C) and the organic medium (D), in the defoamer composition. Further, the nonionic surfactant (A) controls the particle size of the droplets in which the respective components are mixed to an appropriate size that functions as a defoamer in an aqueous paint and stabilizes the dispersion to thereby contribute to development of the defoaming function.

The HLB in the present invention is determined by the following formula based on the Griffin method.

$$HLB = 20 \times (\text{sum of formula weights of hydrophilic moieties}) / (\text{molecular weight})$$

The hydrophilic moiety in the above formula is defined as described above.

<Specific Examples>

As the nonionic surfactant (A) according to the present invention, a nonionic surfactant is selected which has the above-mentioned hydrophilic moiety and an HLB value within the above-mentioned range, and which is in a liquid state in a liquid medium contained in the composition at 25°C and does not exist in a solid state (that is, which does not exist as fine particles in the defoamer composition). Whether a compound contained in the defoamer composition according to the present invention, which has the above-mentioned hydrophilic moiety and an HLB value within the above-mentioned range, corresponds to the nonionic surfactant (A) according to the present invention can be determined by the following method. For example, after a compound to be identified is dispersed in a mixed solution of a liquid medium component contained in the defoamer composition, excluding the compound to be identified, in an amount such that the content of the compound to be identified does not exceed 50 mass%, the dispersion liquid is filtered and thoroughly washed with the above mixed solution, and if no filtration residue is obtained, it is determined that the compound to be identified is the nonionic surfactant (A). On the other hand, if a filtration residue is obtained after the above filtration and washing, it can be determined that the compound to be identified is the nonionic surfactant (A) by performing a qualitative analysis to confirm that the compound to be identified is not contained.

The nonionic surfactant (A) includes, for example, one or more selected from ethylene glycol aliphatic ethers, polyoxyalkylene aliphatic ethers, polyoxyalkylene aromatic ethers, polyoxyalkylene fatty acid esters, alkylene oxide addition derivatives of castor oil, alkylene oxide addition derivatives of hydrogenated castor oil, polyoxyalkylene polyhydric alcohol ethers, polyhydric alcohol fatty acid esters, alkylene oxide addition derivatives of polyhydric alcohol fatty acid esters, polyoxyalkylene alkyl amides, acetylene glycol and derivatives thereof, alkylene oxide addition derivatives of acetylene glycol, polyoxyethylene-polyoxypropylene block copolymers and polyoxyethylene-polyoxypropylene-polyoxyethylene block copolymers.

Examples of the ethylene glycol aliphatic ethers include those in which a fatty chain having 9 to 22 carbon atoms is ether-bonded to ethylene glycol.

Examples of the polyoxyalkylene aliphatic ethers include polyoxyethylene aliphatic ether, polyoxyethylene-polyoxypropylene aliphatic ethers, and the like. These polyoxyalkylene aliphatic ethers have 1 to 22 carbon atoms. Examples of the polyoxyalkylene aromatic ethers include polyoxyethylene aromatic ethers, polyoxyethylene-polyoxypropylene aromatic ethers, and the like. These polyoxyalkylene aromatic ethers have 6 to 28 carbon atoms. Examples of the polyoxyalkylene fatty acid esters include polyoxyethylene fatty acid esters, polyoxyethylene-polyoxypropylene fatty acid esters, and the like. These polyoxyalkylene fatty acid esters have 1 to 22 carbon atoms.

Examples of the alkylene oxide addition derivatives of castor oil or hydrogenated castor oil include polyoxyalkylene castor oil ethers such as polyoxyethylene castor oil ethers and polyoxyethylene-polyoxypropylene castor oil ethers, polyoxyalkylene hydrogenated castor oil ethers such as polyoxyethylene hydrogenated castor oil ethers and polyoxyethylene-polyoxypropylene hydrogenated castor oil ethers, polyoxyalkylene castor oil ether fatty acid esters such as polyoxyethylene castor oil ether fatty acid esters and polyoxyethylene-polyoxypropylene castor oil ether fatty acid esters, polyoxyalkylene hydrogenated castor oil ether fatty acid esters such as polyoxyethylene hydrogenated castor oil ether fatty acid esters (e.g., polyoxyethylene hydrogenated castor oil monoisostearate, polyoxyethylene hydrogenated castor oil triisostearate, etc.), and polyoxyethylene-polyoxypropylene hydrogenated castor oil ether fatty acid esters, and the like.

For example, when an ethylene oxide adduct of castor oil or hydrogenated castor oil is used, the number of moles of ethylene oxide (EO) added to castor oil or hydrogenated castor oil is preferably 5 moles to 100 moles, and more preferably 5 moles to 60 moles. The number of moles of the added EO within the above range can improve defoaming properties and shear resistance of the defoamer of the present invention.

The polyoxyalkylene polyhydric alcohol ethers include those obtained by adding alkylene oxides to polyhydric alcohols. Examples of the alkylene oxides include ethylene oxide, propylene oxide and butylene oxide. Examples of the polyhydric alcohols include glycerin, polyglycerin, trimethylolpropane, pentaerythritol, monosaccharides, disaccharides, trisaccharides, oligosaccharides, polysaccharides, sorbitol and sorbitan, the monosaccharides, the disaccharides, the trisaccharides, the oligosaccharides and the polysaccharides having a glucose or fructose skeleton. The polyhydric alcohol fatty acid esters include esters of polyhydric alcohols and fatty acids. Examples of the polyhydric alcohols include glycerin, polyglycerin, trimethylolpropane, pentaerythritol, monosaccharides, disaccharides, trisaccharides, oligosaccharides, polysaccharides, sorbitol and sorbitan, the monosaccharides, the disaccharides, the trisaccharides, the oligosaccharides and the polysaccharides having a glucose or fructose skeleton. Examples of the fatty acids include acetic acid, propionic acid, caproic acid, caprylic acid, capric acid, lauric acid, myristic acid, palmitic acid, stearic acid, isostearic acid, oleic acid, 12-hydroxystearic acid, linoleic acid, linolenic acid, behenic acid and erucic acid. Examples of the alkylene oxide addition derivatives of polyhydric alcohol fatty acid esters include those obtained by adding alkylene oxides such as ethylene oxide, propylene oxide and butylene oxide to the above polyhydric alcohol fatty acid esters. Examples of the polyoxyalkylene alkyl amides include polyoxyethylene stearyl amide, polyoxyethylene oleyl amide, and the like.

The acetylene glycol and derivatives thereof and alkylene oxide addition derivatives of acetylene glycol includes commercially available products, and examples thereof include SURFYNOL (registered trademark: product name of Nissin Chemical Industry Co., Ltd.) series, ACETYLENOL (registered trademark: product name of Kawaken Fine Chemicals Co., Ltd.) series, and the like.

The number of moles of ethylene oxide (EO) added to acetylene glycol or acetylene glycol derivatives is preferably 1 mole to 10 moles. In order to improving the defoaming properties of the defoamer of the present invention, the number of moles of the added EO is more preferably 1 mole to 4 moles.

The polyoxyethylene-polyoxypropylene block copolymer or the polyoxyethylene-polyoxypropylene-polyoxyethylene block copolymer that can be used may be, for example, those in which the total mass of ethylene oxide block in the copolymer molecule is 10 mass% to 50 mass% and preferably 10 mass% to 20 mass%, and the weight-average molecular weight of propylene oxide block is 700 to 4,000 and preferably 3,000 to 4,000. In the above range, a liquid type block copolymer is more desirable.

Among the specific examples described above, it is preferred to use polyoxyethylene hydrogenated castor oil, polyoxyethylene hydrogenated castor oil triisostearate, and the like in order to improve defoaming properties.

<Content>

The content of the above nonionic surfactant (A) is preferably 5 mass% to 80 mass% when the total mass of all components in the defoamer composition is 100 mass%. The content of the nonionic surfactant (A) of 5 mass% to 80 mass% can achieve sufficient defoaming properties. In order to further enhance the defoaming effect, the content of the nonionic surfactant (A) is more preferably 10 mass% to 50 mass%.

(Polymer (B))

The polymer (B) according to the present invention is a component for imparting defoaming properties, and is added to improve permeation of the defoamer into the foam lamella. The polymer (B) that can be used is a polymer having an SP value of 7.5 to 12 and a weight-average molecular weight of 400 to 1,000,000. As the polymer (B), a polymer is selected which does not have the above-mentioned hydrophilic moiety (ethylene glycol moiety, polyethylene glycol moiety, polyhydric alcohol moiety) in a molecule, and which has a liquid or rubber-like form or which is in a liquid state in a liquid medium contained in the composition at 25°C and does not exist in a solid state (that is, which does not exist as fine particles in the defoamer composition) even if it is in a solid state at 25°C. A polymer having a liquid form can be used alone, and a polymer having a rubber or solid form is dissolved in a liquid component before use.

<SP Value, Weight-Average Molecular Weight>

The SP value of the polymer (B) according to the present invention is in the range of 7.5 to 12. When the SP value is less than 7.5, problems in coating appearance, such as cissing and seeding, may occur. On the other hand, when the SP value is more than 12, defoaming effect is poor, and satisfactory defoaming properties may not be achieved. In order to further improve defoaming properties, the SP value is preferably 7.5 to 11, more preferably 8.0 to 9.5, and still more preferably 8.0 to 9.0.

In the present invention, the SP value is calculated by the Fedors method, and the unit is $(cal/cm^3)^{1/2}$. The Fedors method is a method for estimating the SP value from the molecular structure, and the SP value can be estimated from the relationship between the cohesive energy per atomic group (cal/mol) and the molar molecular volume ($cm^3$/mol).

Further, the weight-average molecular weight of the polymer (B) of the present invention is in the range of 400 to 1,000,000. When the weight-average molecular weight is less than 400, sufficient defoaming properties cannot be achieved. On the other hand, when the weight-average molecular weight is more than 1,000,000, it is difficult to uniformly disperse the polymer (B) in the paint, which may cause problems such as cissing and cratering. In order to further improve defoaming properties, the weight-average molecular weight is preferably 400 to 300,000.

The weight-average molecular weight in the present invention is a value calculated based on a molecular weight of standard polystyrene in a chromatogram measured by gel permeation chromatography (GPC).

<Specific Examples>

The polymer (B) according to the present invention is a polymer having the above-mentioned SP value and weight-average molecular weight, and not having any of an ethylene glycol moiety, a polyethylene glycol moiety and the above polyhydric alcohol moiety. The term "polymer (B)" as used in the present invention is a compound having a monomer unit as a repeating unit and a degree of polymerization of 3 or greater, or a derivative thereof. The polymer (B) that can be suitably used may be, for example, one or more polymers of polyvinyl alkyl ethers, polybutadiene, polybutene, polyisoprene, polyalphaolefins, polyalkyl (meth)acrylates, copolymers of dibasic acid esters, poly(fatty acid vinyl esters), copolymers of alkyl (meth)acrylates and fatty acid vinyl esters, and polyalkylene glycol derivatives (the polyalkylene glycol derivatives not having any of the above ethylene glycol moiety, the above polyethylene glycol moiety and the above polyhydric alcohol moiety, and having a weight-average molecular weight of 400 to 1,000,000).

The above polyvinyl alkyl ethers can be obtained by polymerizing a vinyl ether monomer having an alkyl group with 1 to 18 carbon atoms. Examples of the vinyl ether monomer include methyl vinyl ether, ethyl vinyl ether, n-propyl vinyl ether, isopropyl vinyl ether, n-butyl vinyl ether, isobutyl vinyl ether, tert-butyl vinyl ether, hexyl vinyl ether, n-octyl vinyl ether, 2-ethylhexyl vinyl ether, isononyl vinyl ether, dodecyl vinyl ether, tetradecyl vinyl ether, hexadecyl vinyl ether and octadecyl vinyl ether, and any one or more of these monomers can be selected and used.

The polyvinyl alkyl ethers can be obtained by polymerizing the above monomers by cationic polymerization. The weight-average molecular weight of the polyvinyl alkyl ether is preferably 1,000 to 500,000, and more preferably 2,000 to 300,000. When the weight-average molecular weight is less than 1,000, sufficient defoaming properties may not be achieved. When the weight-average molecular weight is more than 500,000, it is difficult to uniformly disperse the polymer in the paint, which may cause problems such as cissing and cratering.

The polybutadiene that can be used include homopolymers and copolymers of 1,3-butadiene ($CH_2$=CH-CH=$CH_2$) or 1,2-butadiene ($CH_2$=C=CH-$CH_3$). Further, commercially available polybutadienes may also be used. The commercially available polybutadienes include homopolymers, hydrogenated type, terminal carboxylic acid group type, terminal hydroxyl group type, and the like. Examples of the homopolymers include B-1000 (15- to 25-mer: number-average molecular weight approx. 1,000), B-2000 (30- to 40-mer: number-average molecular weight approx. 2,000) and B-3000 (45- to 65-mer: number-average molecular weight approx. 3,000) (all manufactured by Nippon Soda Co., Ltd.). Examples of the hydrogenated type include BI-2000 (30- to 40-mer: number-average molecular weight approx. 2,000) and BI-3000 (45- to 65-mer: number-average molecular weight approx. 3,000) (both manufactured by Nippon Soda Co., Ltd.). Examples of the terminal carboxylic acid group type include C-1000 (20- to 30-mer: number-average molecular weight approx. 1,400) (manufactured by Nippon Soda Co., Ltd.). Examples of the terminal hydroxyl group type include G-1000 (20- to 30-mer: number-average molecular weight approx. 1,500), G-2000 (30- to 40-mer: number-average molecular weight approx. 2,000), G-3000 (45- to 60-mer: number-average molecular weight approx. 2,900) (all manufactured by Nippon Soda Co., Ltd.), Poly bd R-15HT (20- to 25-mer: number-average molecular weight approx. 1,200) and Poly bd R-45HT (45- to 55-mer: number-average molecular weight approx. 2,800) (all manufactured by Idemitsu Kosan Co., Ltd.). Any one or more of these polymers can be selected and used.

The weight-average molecular weight of the polybutadiene is preferably 2,000 to 300,000, more preferably 2,000 to 230,000, still more preferably 2,000 to 200,000, and most preferably 3,000 to 10,000. When the weight-average molecular weight is less than 2,000, sufficient defoaming properties may not be achieved. When the weight-average molecular weight is more than 300,000, it is difficult to uniformly disperse the polymer in the paint, which may cause problems such as cissing, cratering and loss of gloss of the coating film. Further, the SP value of the polybutadiene is more preferably 7.5 to 9.0.

The polybutene that can be used includes homopolymers of 1-butene and copolymers of 1-butene and isobutene. Further, commercially available polybutenes may also be used. The commercially available polybutenes include copolymers of 1-butene and isobutene, homopolymers of 1-butene, hydrogenated type, and the like. Examples of the copolymers of 1-butene and isobutene include LV-7 (4- to 6-mer: number-average molecular weight approx. 300), LV-50 (6- to 9-mer: number-average molecular weight approx. 450), LV-100 (8- to 12-mer: number-average molecular weight approx. 500), HV-15 (9- to 13-mer: number-average molecular weight approx. 630), HV-35 (10- to 15-mer: number-average molecular weight approx. 750), HV-50 (12- to 16-mer: number-average molecular weight approx. 800), HV-100 (16- to 20-mer: number-average molecular weight approx. 980), HV-300 (23- to 27-mer: number-average molecular weight approx. 1,400) and HV-1900 (45- to 55-mer: number-average molecular weight approx. 2,900) (all manufactured by ENEOS Corporation). Examples of the homopolymers of 1-butene include 15R (9- to 11-mer: number-average molecular weight approx. 570), 35R (12- to 14-mer: number-average molecular weight approx. 720), 100R (16- to 20-mer: number-average molecular weight approx. 960) and 300R (24- to 30-mer: number-average molecular weight approx. 1,500) (all manufactured by Idemitsu Kosan Co., Ltd.). Examples of the hydrogenated type include 0H (5- to 7-mer: number-average molecular weight approx. 350), 5H (6- to 8-mer: number-average molecular weight approx. 400), 10H-T (7- to 10-mer: number-average molecular weight approx. 470), 300H (24- to 30-mer: number-average molecular weight approx. 1,500) and 2000H (50- to 55-mer: number-average molecular weight approx. 3,000) (all manufactured by Idemitsu Kosan Co., Ltd.). Any one or more of these polymers can be selected and used.

The weight-average molecular weight of the polybutene is preferably 400 to 50,000, and more preferably 400 to 20,000. When the weight-average molecular weight is less than 400, sufficient defoaming properties may not be achieved. When the weight-average molecular weight is more than 50,000, it is difficult to uniformly disperse the polymer in the paint, which may cause problems such as cissing, cratering and loss of gloss of the coating film. Further, the SP value of the polybutene is more preferably 7.5 to 9.0.

As the polyisoprene, commercially available products can be used. The commercially available polyisoprenes include terminal hydroxyl group type, hydrogenated type, and the like. Examples of the terminal hydroxyl group type include Poly iP (30- to 40-mer: number-average molecular weight approx. 2,500) (manufactured by Idemitsu Kosan Co., Ltd.). Examples of the hydrogenated type include EPOL (manufactured by Idemitsu Kosan Co., Ltd.), which is a hydrogenated type of Poly iP. Any one or more of these polymers can be selected and used.

The weight-average molecular weight of the polyisoprene is preferably 2,000 to 50,000, and more preferably 3,000 to 20,000. When the weight-average molecular weight is less than 2,000, sufficient defoaming properties may not be achieved. When the weight-average molecular weight is more than 50,000, it is difficult to uniformly disperse the polymer in the paint, which may cause problems such as cissing, cratering and loss of gloss of the coating film. Further, the SP value of the polyisoprene is more preferably 7.5 to 9.0.

Examples of the polyalphaolefins include poly(1-hexene), poly(1-octene), poly(1-decene), poly(1-dodecene) and ethylene-propylene copolymers, and any one or more of these polymer can be selected and used.

The weight-average molecular weight of the polyalphaolefin is preferably 400 to 100,000, more preferably 400 to 10,000, and still more preferably 500 to 5,000. When the weight-average molecular weight is less than 400, sufficient defoaming properties may not be achieved. When the weight-average molecular weight is more than 100,000, it is difficult to uniformly disperse the polymer in the paint, which may cause problems such as cissing, cratering and loss of gloss of the coating film. Further, the SP value of the polyalphaolefin is more preferably 7.5 to 9.0.

Examples of the polymer (B) according to the present invention that can be used further include, in addition to the above-mentioned polymers, polyalkyl (meth)acrylates, copolymers of dibasic acid esters, poly(fatty acid vinyl esters), copolymers of alkyl (meth)acrylates and fatty acid vinyl esters, and polyalkylene glycol derivatives (the polyalkylene glycol derivatives not having any of an ethylene glycol moiety, a polyethylene glycol moiety and the above polyhydric alcohol moiety, and having a weight-average molecular weight of 400 to 1,000,000). Examples of the polyalkyl (meth)acrylates include polymers and copolymers of monomers such as methyl (meth)acrylates, ethyl (meth)acrylates, n-propyl (meth) acrylates, isopropyl (meth)acrylates, n-butyl (meth)acrylates, isobutyl (meth)acrylates, tert-butyl (meth)acrylates, hexyl (meth)acrylates, n-octyl (meth)acrylates, isooctyl (meth)acrylates, 2-ethylhexyl (meth)acrylates, isononyl (meth)acrylates, n-decyl (meth)acrylates, isodecyl (meth)acrylates, lauryl (meth)acrylates, stearyl (meth)acrylates, isostearyl (meth) acrylates, oleyl (meth)acrylates, behenyl (meth)acrylates, benzyl (meth)acrylates, cyclohexyl (meth)acrylates and isobornyl (meth)acrylates. Examples of the copolymers of dibasic acid esters include polymers and copolymers of monoesters or diesters of maleic acid, and polymers and copolymers of monoesters or diesters of fumaric acid. Examples of the poly(fatty acid vinyl esters) include polymers and copolymers of monomers such as vinyl acetate, vinyl pivalate, vinyl propionate, vinyl butyrate, vinyl caproate, vinyl caprylate, vinyl caprate, vinyl laurate, vinyl palmitate, vinyl octylate, vinyl 2,2-dimethyloctanoate, vinyl neononanoate, vinyl neodecanoate and vinyl neoundecanoate. Examples of the copolymers of alkyl (meth)acrylates and fatty acid vinyl esters include copolymers composed of a combination of the above (meth) acrylate and the above fatty acid vinyl ester. For the polyalkyl (meth)acrylates, copolymers of dibasic acid esters, poly(fatty acid vinyl esters) and copolymers of alkyl (meth)acrylates and fatty acid vinyl esters, monomers other than those described above and not including any of an ethylene glycol moiety, a polyethylene glycol moiety and a polyhydric alcohol moiety may be copolymerized in an amount not exceeding 50 mol% to the extent that the defoaming properties and shear resistance are not impaired. Examples of the polyalkylene glycol derivatives include polypropylene glycol, polybutylene glycol, polypropylene glycol monobutyl ether, polypropylene glycol monostearyl ether, and polypropylene glycol added to polyhydric alcohols such as glycerin, trimethylolpropane and sugars, polybutylene glycol adducts, and the like, which do not fall under the nonionic surfactant (A).

Among the specific examples described above, it is preferred to use polyvinyl alkyl ethers, polybutadiene, polybutene and polyalphaolefins in order to improve defoaming properties, coating appearance, shear resistance and overcoatability.

<Content>

The content of the above polymer (B) is preferably 10 mass% to 90 mass% when the total mass of all components in the defoamer composition is 100 mass%. The content of the polymer (B) of 10 mass% to 90 mass% can achieve sufficient defoaming performance. **In** order to further enhance the defoaming effect, the content of the polymer (B) is more preferably 20 mass% to 70 mass%.

(Organic Solid Fine Particles (C))

The organic solid fine particles (C) according to the present invention are components for imparting defoaming properties, and is added to enhance foam-breaking effect of the defoamer and improve shear resistance of the paint. The organic solid fine particles (C) are selected from materials with a melting point of 50°C or higher, and are solid fine particles at 25°C. Such organic solid fine particles (C) are in a solid state in a liquid medium contained in the composition at 25°C. Further, the organic solid fine particles (C) selected are fine particles which have a particle size of 0.1 $\mu$m or greater when present in the defoamer composition, do not dissolve in the defoamer composition at 25°C, and do not change the shape of the primary particles.

The term "primary particles" used in the present invention refers to isolated particles that cannot be divided into smaller particles after dilution with a specific medium. Further, whether the organic solid fine particles (C) are in a solid state in the liquid medium contained in the defoamer composition at 25°C can be determined by a known qualitative method. For example, a method can be used in which, after dispersing the organic solid fine particles in an amount not exceeding 50 mass% in a liquid medium contained in the composition, the dispersion liquid is filtered or centrifuged to separate non-fluidic components, and their melting points are measured.

<Particle Shape>

The organic solid fine particles (C) selected are solid fine particles composed of an organic compound and not dispersible in water by themselves. Further, when the particle size distribution is measured by laser diffraction and scattering measurement method or the like, the particle size has a peak in the range of 0.1 $\mu$m to 150 $\mu$m. That is, the peak particle size (also referred to as a "mode diameter") of the organic solid fine particles (C) is preferably in the range of 0.1 $\mu$m to 150 $\mu$m, more preferably 2 $\mu$m to 150 $\mu$m, and still more preferably 2 $\mu$m to 50 $\mu$m. The peak particle size of the organic solid fine particles (C) within the above range can provide a defoamer composition which is particularly excellent in shear resistance.

The particles preferably have asperities on the surface rather than a perfect spherical shape, and porous particles and particles having spine-like projections are more preferred. Such particles may be, for example, clusters of fine particles whose primary particles have an aspect ratio of 1.1 to 100. In particular, when using the above clusters, the surface of the fine particles can suitably retain a mixed liquid composed of a defoaming liquid component (for example, the nonionic surfactant (A) or the polymer (B)) and the organic medium (D), resulting in particularly excellent shear resistance. The aspect ratio of the primary particles can be controlled by appropriately adjusting the temperature at which the fine particles are deposited and crystals are grown and the time for which the temperature is maintained in the process of preparing the organic solid fine particles (C).

When the aspect ratio is less than 1.1, it is difficult to form clusters, making it difficult to retain the defoaming liquid component and to achieve excellent shear resistance. On the other hand, when the aspect ratio is more than 100, clusters have too large voids, which also makes it difficult to retain the defoaming liquid component and to achieve excellent shear resistance. From the perspective of further improving the shear resistance, the aspect ratio is preferably in the range of 1.5 to 50, more preferably in the range of 2.0 to 11, and most preferably in the range of 2.0 to 9.0.

The aspect ratio of the primary fine particles can be calculated by measuring the shape of the isolated fine particles in observation with a TEM or SEM. Specifically, it can be calculated by the following method, for example. The fine particles to be measured are diluted and suspended in an appropriate volatile organic solvent or the like in which the fine particles do not dissolve, and dropped onto a TEM observation grid or SEM observation sample mount and dried to prepare an observation sample. The solvent type and the amount of dilution are adjusted as appropriate so that the fine particles are isolated. The sample prepared using a TEM or SEM is set to a magnification at which the isolated fine particles are easily observed, and the shape of the isolated fine particle is observed. When the shape of the fine particles is considered to be elliptical, the lengths of the minor and major axes are measured, and the value of the ratio major axis/minor axis is calculated. Similar measurements are performed for at least 10 fine particles, and the average of these measurements is taken as the aspect ratio of the fine particles. When the fine particles are fibrous and are not considered to be elliptical, the median value of the measured fiber widths is taken as the fiber width, and the value of the ratio fiber length/fiber width is calculated. Similar measurements are performed for at least 10 isolated fibrous fine particles, and the average of these measurements is taken as the aspect ratio of the fibrous fine particles.

<Specific Examples>

The organic solid fine particles (C) are not particularly limited, and for example, one or more solid fine particles of amide, urea, polyethylene, polyethylene oxide, acid-modified polyethylene and hydrogenated castor oil can be suitably used.

Amides can be obtained by, for example, condensation reaction of fatty acids with amines. The conditions of the condensation reaction (reaction temperature, formulation ratio of the components, and the like) may be set as appropriate by a known method. For example, fatty acids and amines as raw materials are introduced into a reaction vessel such as a four-neck flask, and the raw materials are stirred in an inert gas atmosphere (for example, under a nitrogen gas flow or the like) to prepare a mixture. Then, the mixture of the raw materials is heated and subjected to a polycondensation reaction at 150°C to 200°C for 2 to 10 hours to synthesize a fatty acid amide. Examples of the fatty acids used include monocarboxylic acids, dicarboxylic acids and tricarboxylic acids, and examples of the amines used include monoamines, diamines and triamines.

Examples of the monocarboxylic acids include saturated aliphatic monocarboxylic acids such as acetic acid, propionic acid, butyric acid, valeric acid, caproic acid, enanthic acid, caprylic acid , pelargonic acid, capric acid, lauric acid, myristic acid, palmitic acid, stearic acid, hydrogenated castor oil fatty acid (fatty acid containing a hydroxyl group, such as 12-hydroxystearic acid (hereinafter, referred to as "12-HSA") obtained by saponifying hydrogenated castor oil), arachidic acid and behenic acid; and unsaturated aliphatic monocarboxylic acid such as oleic acid, linoleic acid, ricinoleic acid, linolenic acid, eicosenoic acid, erucic acid and mixed fatty acids obtained from natural fats and oils (tall oil fatty acid, rice bran fatty acid, soybean oil fatty acid, tallowate, etc.). Among these monocarboxylic acids, it is preferred to contain at least a hydroxy fatty acid such as 12-HSA as the monocarboxylic acid for enhancing the defoaming properties and shear resistance of the aqueous paint. That is, the amide used as the organic solid fine particles (C) of the present invention is preferably an amide in which at least one of the fatty acids is a hydroxy fatty acid.

The dicarboxylic acid used may be, for example, a dicarboxylic acid having 4 to 44 carbon atoms, and examples of such dicarboxylic acids include succinic acid, glutaric acid, adipic acid, pimelic acid, suberic acid, azelaic acid, sebacic acid, dodecanedioic acid, maleic acid, fumaric acid, phthalic acid, isophthalic acid, terephthalic acid and dimer acids. Dimer acids are polymerized fatty acids obtained by polymerizing (dimerizing) unsaturated fatty acids (for example, unsaturated fatty acid having 18 or 22 carbon atoms) obtained from vegetable oil such as soybean oil, tall oil, linseed oil, cottonseed oil, or the like. Typically, dimer acids having 36 or 44 carbon atoms are commercially available.

The tricarboxylic acid used may be, for example, a tricarboxylic acid having 4 to 54 carbon atoms, and examples of such tricarboxylic acids include trimer acids and trimesic acids. Trimer acids are polymerized fatty acids obtained based on dimer acids by increasing the trimer acid content by distillation purification or the like. Typically, trimer acids having 54 carbon atoms are commercially available.

Examples of the monoamines include ethylamine, monoethanolamine, propyl amine, butyl amine, pentyl amine, hexyl amine, octyl amine, decyl amine, lauryl amine, myristyl amine, cetyl amine, stearyl amine, 12-hydroxy stearyl amine and behenyl amine.

The diamines that can be used may be diamines having 2 to 54 carbon atoms. Examples of the diamines having 2 to 54 carbon atoms include aliphatic diamines such as 1,2-diaminoethane (ethylenediamine: EDA), 1,2-diaminopropane (propylenediamine: PDA), 1,4-diaminobutane (tetramethylenediamine: TMDA), 1,6-diaminohexane (hexamethylenediamine: HMDA), 1,8-diaminooctane (octamethylenediamine: OMDA), trimethylhexamethylenediamine and 1,12-diaminododecane (dodecamethylenediamine: DMDA); aromatic diamines such as o-xylylenediamine, m-xylylenediamine (MXDA), p-xylylenediamine (PXDA), diaminodiphenylmethane, diaminodiphenyl ether, diaminodiphenyl sulfone and methylenebischloroaniline; and alicyclic diamines such as piperazine, isophorone diamine and 1,3-bisaminomethylcyclohexane.

Triamines that can be used may be triamines having 2 to 54 carbon atoms. Examples of the triamines having 2 to 54 carbon atoms include aliphatic triamines such as diethylene triamine.

As the amines used in synthesis of the amide of the present invention, diamines or triamines derived from polymerized fatty acids, which are polymerized fatty acid derivatives, can also be used. Examples of such polymerized fatty acid derivatives include dimer diamines (DDA), which are dimer acid derivatives, and trimer triamines (TTA), which are trimer acid derivatives. The dimer diamines are dimer acid derivatives in which two terminal carboxyl groups of the above-mentioned dimer acids are substituted with primary aminomethyl groups or amino groups, and commercially available products can be used. The trimer triamines are trimer acid derivatives in which three terminal carboxyl groups of the above-mentioned trimer acids are substituted with primary aminomethyl groups or amino groups, and commercially available products can be used.

Any one or more of the above compounds used as the fatty acids and the amines can be selected and used.

From the perspective of further improving the shear resistance, the amide is preferably a diamide. Diamides can be obtained by reacting fatty acids with diamines, or by reacting monoamines with dicarboxylic acids. Among the diamides, fatty acid diamides obtained by reacting the following fatty acids with the following diamines are more preferred. The fatty acids used in synthesis of the fatty acid diamide are selected from the group consisting of alkyl fatty acids (saturated fatty acids) and hydroxy fatty acids, and contain at least one hydroxy fatty acid. Further, the diamines used in synthesis of the fatty acid diamide include one or more diamines selected from the group consisting of alkylenediamines having 2 to 6 carbon atoms and m-xylylenediamines. Among these fatty acid diamides, ethylene bis 12-hydroxystearic acid diamide, 1,4-butane bis 12-hydroxystearic acid diamide, hexamethylene bis 12-hydroxystearic acid diamide, or the like can be used as the organic solid fine particles (C) to provide particularly excellent shear resistance in aqueous paints containing the defoamer of the present invention.

Urea is a polymer, oligomer, diurea or monourea having a urea bond obtained by reaction of an isocyanate compound with an amine compound. As the isocyanate compound and the amine compound, one or more of the following compounds can be arbitrarily selected and used.

Examples of the isocyanate compounds that can be used include aromatic monoisocyanates, aliphatic monoisocyanates, alicyclic monoisocyanates, compounds obtained by making these monoisocyanates non-volatile and less toxic, aromatic diisocyanates, aliphatic diisocyanates, alicyclic diisocyanates, compounds obtained by making these diisocyanates non-volatile and less toxic, biurets, uretdiones, isocyanurates, adducts such as allophanates of these diisocyanates, and urethane prepolymers of relatively low molecular weight. Examples of the aromatic diisocyanates include tolylene diisocyanate (TDI), 4,4'-diphenylmethane diisocyanate (MDI), xylylene diisocyanate (XDI) and m-xylylene diisocyanate (MXDI). Examples of the aliphatic diisocyanates include hexamethylene diisocyanate (HDI). Examples of the alicyclic polyisocyanate compound include isophorone diisocyanate (IPDI), and the like. The polyisocyanates may be commercially available products. Examples of the commercially available products include Aquanate 130, Aquanate 140, Aquanate 200 and Aquanate 210 (manufactured by Tosoh Corporation), Bayhydur 304, Bayhydur XP-2655, Bayhydur 401-70 and Bayhydur 3100 (manufactured by Sumika Covestro Urethane Co., Ltd.), Burnock DNW-5000, Burnock DNW-5500 and Burnock DNW-6000 (manufactured by DIC Corporation), Resamine D-1063 and Resamine D-2040 (manufactured by Dainichiseika Color & Chemicals Mfg. Co., Ltd.), and the like.

Examples of the amine compounds include monoamines or polyamines.

Examples of the monoamines that can be used include aliphatic monoamines, alicyclic monoamines, aromatic monoamines and alkanolamines. Examples of the aliphatic monoamines include alkylmonoamines and other aliphatic monoamines. Examples of the alkylmonoamines include octylamine, dodecyl amine, octadecylamine and octadecenyl-lamine. Examples of the alicyclic monoamines include cyclohexylamine. Examples of the aromatic monoamines include aniline and toluidine. Examples of the alkanolamines include ethanolamine, 2-amino-2-methyl-1-propanol and 12-hydroxystearylamine.

Examples of the polyamines include aliphatic polyamines, alicyclic polyamines and aromatic polyamines. Examples of the aliphatic polyamines include alkylene polyamines, polyalkylene polyamines and other aliphatic polyamines. Examples of the alkylene polyamines include diaminomethane (methylenediamine), 1,2-diaminoethane, 1,2-diaminopropane, 1,3-diaminopropane, 1,4-diaminobutane, 1,5-diaminopentane, 1,6-diaminohexane, 1,7-diaminoheptane, 1,8-diaminooctane, 1,9-diaminononane and 1,10-diaminodecane. Examples of the polyalkylene polyamines include diethylenetriamine, triethylenetetramine, tetraethylenepentamine, pentaethylenehexamine and hexamethylenetetramine. Examples of the other aliphatic polyamines include tetra(aminomethyl)methane, tetrakis(2-aminoethyl aminomethyl)methane, 1,3-bis(2'-aminoethylemino)propane, triethylene-bis(trimethylene)hexamine, bis(3-aminoethyl) amine, bishexamethylenetriamine and polyethyleneimine. Examples of the alicyclic polyamines include 1,4-cyclohexane diamine, 4,4'-methylenebiscyclohexylamine, 4,4'-isopropylidenebiscyclohexylamine, norbornadiamine, bis(aminomethyl)cyclohexane, diaminodicyclohexylmethane, isophoronediamine and menthenediamine (MDA). Examples of the aromatic polyamines include bis(cyanoethyl)diethylenetriamine, o-xylylenediamine, m-xylylenediamine, p-xylylenediamine, phenylenediamine, naphthylenediamine, diaminodiphenylmethane, diaminodiethylphenylmethane, 2,2-bis(4-aminophenyl)propane, 4,4' -diaminodiphenylether, 4,4'-diaminobenzophenone, 4,4'-diaminodiphenylsulfone, 2,2'-dimethyl-4,4'-diaminodiphenylmethane, 2,4'-diaminobiphenyl, 2,3'-dimethyl-4,4'-diaminobiphenyl, 3,3'-dimethoxy-4,4'-diaminobiphenyl, bis(aminomethyl)naphthalene and bis(aminoethyl)naphthalene.

Polyethylene oxide is a wax obtained by oxidizing polyethylene and introducing polar groups. Acid-modified polyethylene is polyethylene graft-modified with unsaturated carboxylic acid or its anhydride.

Hydrogenated castor oil (also referred to as "hydrogenated castor oil") is triglyceride of saturated fatty acids, which is obtained by hydrogenating castor oil. The hydrogenated castor oil that can be used include commercially available products, and examples thereof include C-wax (manufactured by Kokura Synthetic Industries, Ltd.), Kao wax 85P (manufactured by Kao Corporation), hydrogenated castor oil A (manufactured by Itoh Oil Chemicals Co., Ltd.) and hydrogenated castor oil (Yamakei Industries Co., Ltd.).

Examples of the organic solid fine particles (C) according to the present invention that can be used further include, in addition to the above-mentioned examples, polyalkyl (meth)acrylates, copolymers of dibasic acid esters, copolymers of alkyl (meth)acrylates and fatty acid vinyl esters (those in a solid state in the defoamer composition at 25°C, that is, those not belonging to the nonionic surfactant (A) and the polymer (B)).

Among the above specific examples, it is preferred to use ethylene bis 12-hydroxystearic acid diamide, 1,4-butane bis 12-hydroxystearic acid diamide, hexamethylene bis 12-hydroxystearic acid diamide, or the like in order to further enhance defoaming properties and shear resistance.

<Content>

The content of the above organic solid fine particles (C) is preferably 0.1 mass% to 10 mass% when the total mass of all components in the defoamer composition is 100 mass%. The content of the organic solid fine particles (C) of 0.1 mass% to 10 mass% can achieve sufficient defoaming properties and shear resistance. In order to further improve the appearance of the coating film obtained by the aqueous paint composition to which the defoamer composition has been added, the content of the organic solid fine particles (C) is more preferably 1 mass% to 5 mass%.

(Organic Medium (D))

The organic medium (D) according to the present invention is a component for imparting defoaming properties together with the above-mentioned nonionic surfactant (A) and polymer (B), and is added to enhance diffusion properties of the defoamer in the foam lamella.

<Fluidity>

As the organic medium (D), a medium which does not have the above-mentioned hydrophilic moiety in a molecule, and which is liquid at 25°C and other than water can be used. Further, those having a weight-average molecular weight of less than 400 are selected as the organic medium (D). Using such a medium can improve diffusion properties of the defoamer according to the present invention in the foam lamella.

<Specific Examples>

The organic medium (D) that can be suitably used may be, for example, one or more selected from the group consisting of hydrocarbon oils, alcohols, glycol ethers and glycol esters (those not included in the nonionic surfactant (A) and the polymer (B)).

Examples of the hydrocarbon oils that can be used include n-paraffins and isoparaffins represented by general formula $C_nH_{2n+2}$, and cycloparaffins represented by $C_nH_{2n}$.

Examples of the n-paraffins represented by the above general formula $C_nH_{2n+2}$ include n-hexane, n-heptane, n-octane, n-decane, n-dodecane and liquid paraffin, and commercially available n-paraffin-based mixed solvents can also be used. Examples of the commercially available n-paraffin-based mixed solvents include #0 Solvent L (manufactured by ENEOS Corporation). Any one or more of these can be selected and used.

Examples of the isoparaffins represented by the above general formula $C_nH_{2n+2}$ include isohexane, isooctane, isododecane and isohexadecane, and commercially available isoparaffin-based mixed solvents can also be used. Examples of the commercially available isoparaffin-based mixed solvents include IP Solvent, Merveille 30 (all manufactured by Idemitsu Kosan Co., Ltd.), ShellSol T series (manufactured by Shell Chemicals) and Isopar series (manufactured by Exxon Mobil Corporation). Any one or more of these can be selected and used.

Examples of the cycloparaffins represented by the above general formula $C_nH_{2n}$ include commercially available naphthenic solvents. Examples of the commercially available naphthenic solvents include methylcyclohexane, ethylcyclohexane and Swaclean 150 (also known as: mixture of C9 and C10 alkylcyclohexanes) (all manufactured by Maruzen Petrochemical Co., Ltd.), Naphthesol series and Cactus Solvent series (all manufactured by ENEOS Corporation). Any one or more of these can be selected and used.

Further, as the organic medium (D), commercially available solvents may be used in which at least two or more of n-paraffins and isoparaffins represented by general formula $C_nH_{2n+2}$ and cycloparaffins represented by general formula $C_nH_{2n}$ used in the present invention are premixed. Examples of such solvents include Naphthesol M (naphthene/isoparaffin/n-paraffin = 70% or greater/5 to 10%/15% or less, trade name of ENEOS Corporation), Isozol 300 (trade name of ENEOS Corporation), Isozol 400 (trade name of ENEOS Corporation), Exxol D80 (mixed solvent of paraffin and cycloparaffin, trade name of Exxon Mobil Corporation), Exxol D110 (mixed solvent of paraffin and cycloparaffin, trade name of Exxon Mobil Corporation), Exxol D130 (mixed solvent of paraffin and cycloparaffin, trade name of Exxon Mobil Corporation), Exxol D160 (mixed solvent of paraffin and cycloparaffin, trade name of Exxon Mobil Corporation). Any one or more of these can be selected and used.

Examples of the alcohols that can be used include ethanol, n-propanol, IPA, n-butanol, sec-butanol, tert-butanol, 2-ethylhexanol, isostearyl alcohol, oleyl alcohol and texanol. Examples of the glycol ethers that can be used include butyl glycol, 2-ethylhexylglycol, methyldiglycol, dimethyldiglycol, methyl triglycol (HLB: 18), methyl propylene glycol, n-propyl propylene glycol, butyl propylene glycol, methyl dipropylene glycol, propyl dipropylene glycol and butyl dipropylene glycol. Examples of the glycol esters that can be used include propylene glycol monomethyl ether acetate and dipropylene glycol monomethyl ether acetate.

The organic medium (D) that can be used may also be, other than those described above, aromatic solvents such as xylene and toluene, ketone-based solvents such as methyl isobutyl ketone (MIBK), methyl ethyl ketone (MEK) and methyl amyl ketone (MAK: also referred to as 2-heptanone), ether-based solvents such as cyclopentyl methyl ether, acetates, ester-based solvents such as ethyl 3-ethoxypropionate, amide-based solvents such as dimethylformamide, N-methyl-2-pyrrolidone, N-ethyl-2-pyrrolidone, 3-methoxy-N,N-dimethylpropane amide and 3-butoxy-N,N-dimethylpropane amide, polyethers, oils and fats, and polyalkylene glycol derivatives (those not included in the nonionic surfactant (A) and the polymer (B).

<Content>

The content of the above organic medium (D) is preferably 0.5 mass% to 70 mass% when the total mass of all components in the defoamer composition is 100 mass%. The content of the organic medium (D) of 0.5 mass% to 70 mass% can achieve sufficient defoaming performance. In order to further enhance the defoaming effect, the content of the organic medium (D) is more preferably 5 mass% to 50 mass%.

(Other Optional Components)

The defoamer composition of the present invention may further contain components other than the above-mentioned components and other than silicone compounds to the extent that does not impair the features of the present invention, in order to impart other functions. For example, solvents, surfactants, amphiphilic compounds or additives other than defoamers may be added for uniformly dissolving or dispersing the above-mentioned components (A) to (D) or improving the leveling properties or homogeneity of the paint to which the defoamer has been added. Specific examples thereof include water, nonionic surfactants, ionic surfactants, leveling agents and dispersants (those not included in the nonionic surfactant (A), the polymer (B), the organic solid fine particles (C) and the organic medium (D)).

(Components Not Contained in Defoamer Composition According to Present Invention)

Preferably, the defoamer composition according to the present invention does not contain a silicone compound (synthesized polymer having a main skeleton formed by siloxane bonds). If a silicone compound is contained in the defoamer composition according to the present invention, a silicone component bleeds onto the surface of the coating film, causing cissing or impairing overcoatability. Thus, if a silicone compound is contained in the defoamer composition of the present invention, it may affect the appearance of the coating film coated with an aqueous paint containing the defoamer composition. Therefore, in the preferred embodiments of the defoamer composition according to the present invention, the defoamer composition does not contain a silicone compound.

(Form of Defoamer Composition)

Specific examples of the form of the defoamer composition according to the present invention include a suspension in which the organic solid fine particles (C) are suspended, a form in which an oily suspension is dispersed in a medium mainly composed of water (O (suspension)/W type emulsion), a form in which droplets mainly composed of water are dispersed in an oily suspension (W/O (suspension) type emulsion), and a form in which the above W/O (suspension) type emulsion is further dispersed in a medium mainly composed of water (W/O (suspension)/W type emulsion).

(Method for Producing Defoamer Composition)

The method for producing a defoamer composition containing the above components is not particularly limited, but in order to facilitate production of a uniformly dispersed defoamer composition and to achieve excellent defoaming properties, it is preferred to prepare a pre-dispersion of the organic solid fine particles (C) (hereinafter, referred to as a "fine particle pre-dispersion") in advance and add it to a mixture of the components. The fine particle pre-dispersion is preferably added while being stirred with a disperser or the like. The stirring rate and stirring temperature may be appropriately set depending on the dispersion state of the organic solid fine particles (C) and the like. The method for preparing a fine particle pre-dispersion is not particularly limited, and any method known to those skilled in the art can be used. Known examples of the method include a method in which an organic solid to be made into fine particles for the organic solid fine particles (C) is melted at a predetermined temperature, and the melted liquid is introduced into a vessel containing the organic medium (D) so that the organic solid fine particles (C) are precipitated while being cooled in the organic medium (D), and a method in which the organic solid fine particles (C) adjusted to a predetermined particle size in advance are heated while being suspended in the organic medium (D).

(Applications of Defoamer Composition)

The applications of the defoamer composition according to the present invention are not particularly limited as long as it is added to aqueous paints, but the defoamer composition is particularly suitably used for applications that require high-quality appearance and in coating systems having a multilayer coating film. For example, the use of the defoamer composition according to the present invention can impart sufficient defoaming properties to automotive aqueous base paints, automotive aqueous intermediate paints, automotive aqueous primer paints, aqueous paints for high-class furniture, floor paints, architectural interior and exterior paints, anticorrosive paints, home appliances, and the like during production, painting and drying, and can prevent occurrence of paint defects such as popping in the baking process. The defoamer composition according to the present invention can also be suitably used in applications where paint materials that are difficult to disperse in water are used and where the paint is stirred to prevent sedimentation and separation of the components of the paint.

(Mechanism of Effects)

Defoaming mechanism for defoaming droplets and hydrophobic fine particles is well known to those skilled in the art. For example, it is described as follows. As defoaming droplets or hydrophobic fine particles enter the foam lamella and the thickness of the foam lamella decreases due to water drainage from the foam lamella, the defoaming components contained in the defoaming droplets or the hydrophobic fine particles penetrate the foam lamella. Since the penetrated defoaming components are highly hydrophobic, the water avoids defoaming components, causing foam breaking. Hydrophobic fine particles are often used in combination with a surfactant to ensure a minimum level of miscibility with aqueous paint systems. However, under high shear or long-term shear, the surfactant separates from the hydrophobic fine particles, exposing the hydrophobic surface. As a result, the hydrophobic fine particles cannot exist stably in the aqueous paint and aggregate. The aggregated hydrophobic fine particles do not redisperse, which causes seeding and the like and reduces the effective fine particle concentration, resulting in a loss of the defoaming effect. In addition, the defoaming droplets are considered to lose their defoaming effect when they gradually become finer due to shear force and are unable to maintain a size sufficient to penetrate the foam lamella.

On the other hand, in the defoamer composition according to the present invention, the hydrophobic organic solid fine particles (C) are present in the defoaming droplets composed of the nonionic surfactant (A), the defoaming polymer (B) and other defoaming components. This form is the same as conventional compound-type defoamers. However, since the organic solid fine particles (C) according to the present invention are an organic substance having high miscibility with the defoaming components, they retain the defoaming components on the particle surface, preventing the hydrophobic surface of the fine particles from being exposed due to shear force. Even if the organic solid fine particles (C) are ejected from the defoaming droplets, a small amount of the defoaming liquid remains on the fine particle surface, which are then quickly formed into protective colloids by the nonionic surfactant (A), preventing aggregation between the organic solid fine particles (C) and re-incorporating the organic solid fine particles (C) that have been made into protective colloids into the defoaming droplets, thereby returning to the form excellent in defoaming effect. It is considered that, even when the aqueous paint containing the defoamer is subjected to high shear or long-term shear, which causes the defoaming droplets to become finer or the hydrophobic fine particles to be ejected from the defoaming droplets, this mechanism can maintain defoaming effect by reconstructing the droplets with defoaming effect around the fine particles that have been formed into protective colloids. In order to construct such a mechanism, it is necessary to appropriately select and combine the materials of the nonionic surfactant (A), the polymer (B) and the organic solid fine particles (C). With regard to imparting the shear resistance by the above mechanism, it is more preferred that the organic solid fine particles (C) have a shape with specific characteristics. Specifically, (1) porous fine particles, (2) fine particles with asperities on the surface, and (3) clusters of microcrystals having a specific aspect ratio are considered to impart improved shear resistance.

[Aqueous Paint Composition]

An aqueous paint composition according to the present invention contains, as essential components, the above-mentioned defoamer composition, and an aqueous resin. Further, an aqueous paint composition according to the present invention may further contain, as optional components, diluting solvents, pigments, dispersants, lubricants, emulsifiers, rheology control agents, film-forming aids, pH adjusting agents, and other paint materials.

(Defoamer Content)

The content of the defoamer composition according to the present invention varies depending on the type of the aqueous resin as a binder in the aqueous paint composition, the formulation composition of pigments, or the like, but typically, the content is preferably 0.1 mass% to 5 mass% of the aqueous paint composition, and more preferably 0.5 mass% to 2 mass%. If the content of the defoamer composition is less than 0.1 mass%, the effects due to addition of the defoamer composition of the present invention, such as defoaming properties and shear resistance, may not be sufficiently exhibited. On the other hand, if the content of the defoamer composition is more than 5 mass%, it is not desirable since it may cause poor interlayer adhesion when applying layers of paint or uneven coating of the topcoat coating film, or may deteriorate water resistance of the dried coating film.

(Aqueous Resin)

The aqueous resin contained as a binder in the aqueous paint composition according to the present invention is a dispersion in which a resin component is dispersed in a medium mainly composed of water, and examples of the resin component include acrylic-based resins, acrylic silicone resins, alkyd-based resins, polyester-based resins, urethane-based resins, epoxy-based resins, silicone resins, fluororesins, and the like. The form of the aqueous resin is classified into water soluble, colloidal dispersion and emulsion depending on the dispersion form, and any form is applicable. These resins may be, for example, thermosetting type, UV-curable type, EB-curable type, oxidative curable type, photocationic curable type or peroxide curable type, or may be resins that are cured by chemical reaction in the presence or absence of a catalyst or may be resins having high glass transition point and forming a film only by volatilizing a diluting medium without involving chemical reactions. Further, examples of curing agents include amino resins, melamine resins, isocyanate compounds, block isocyanate compounds, silane coupling agents, epoxy compounds, and the like.

(Pigment)

Examples of the pigment include extender pigments such as calcium carbonate (ground calcium carbonate (GCC), precipitated calcium carbonate (PCC), and the like), barium sulfate, silicon dioxide, aluminum hydroxide, talc, mica, organic fibers and glass powder; coloring pigments such as titanium dioxide, carbon black, chrome yellow, cadmium yellow, ocher, titanium yellow, zinc chromate, red iron oxide, aluminosilicate, quinacridone pigments, phthalocyanine pigments, anthraquinone pigments, diketopyrrolopyrrole pigments, benzimidazolone pigments, and isoindolinone pigments; and metallic pigments such as aluminum flakes, copper flakes, micaceous iron oxide, mica, and scaly mica powders coated with metal oxide.

(Other Additives)

The aqueous paint composition of the present invention may contain other substances within a range that does not impair the characteristics thereof and purposes of the present invention. Examples of such substances include dispersants, lubricants, emulsifiers, rheology control agents, water scavengers (for example, silane coupling agents), adhesion promoters, surfactants, curing catalysts, film-forming aids, dryers, anti-fouling agents, sensitizers, antioxidants, photostabilizers, UV absorbers, water resistant agents, antiseptic and antifungal agents, leveling agents, flame retardants, antistatic agents, release agents, deodorants, pH adjusting agents, fragrances, and the like.

Here, surfactants are typically used as dispersants to disperse pigments in paints, wetting agents to improve wetting and smoothness of pigments, emulsifiers to emulsify non-aqueous resins, or rheology control agents to control viscosity of paints, but this causes generation of unnecessary bubbles during production and painting of aqueous paints. By adding the defoamer composition of the present invention to the aqueous paint composition, it is possible to suppress generation and persistence of bubbles and to maintain excellent defoaming properties even when high shear force is applied to the paint. As a result, a coating film with excellent coating appearance can be formed without impairing overcoatability.

(Method for Producing Aqueous Paint Composition)

The aqueous paint composition according to the present invention can be produced by using known methods for producing aqueous paints. For example, components other than the defoamer composition and the pigment described above are stirred and mixed in a medium mainly composed of water such as ion-exchanged water or the like, and then the pH is adjusted, if necessary, to prepare a clear paint. The defoamer composition and the pigment are then added and dispersed in the clear paint to produce an aqueous paint composition.

The defoamer composition according to the present invention can be added to the aqueous paint at the timing when the pigment is kneaded as described above or after the aqueous paint is produced. Further, it is also possible to prepare a master batch containing the defoamer composition and add it to the aqueous paint. Further, the defoamer composition and the pigment can be dispersed using a device which is typically used for production of aqueous paints. In addition, conditions for the stirring rate and stirring time in dispersion of the defoamer composition and the pigment are not particularly limited, and may be set as appropriate according to the dispersion state of the defoamer composition and the pigment.

(Applications of Aqueous Paint Composition)

The aqueous paint composition of the present invention is particularly suitably used for applications that require high-quality appearance and in coating systems having a multilayer coating film. Examples of such applications include coating of automotive materials, coating of high-class furniture materials, floor paints, architectural interior and exterior paints, anticorrosive paints, coating of home appliances, and the like. The aqueous paint composition according to the present invention can also be suitably used in applications where paint materials that are difficult to disperse in water are used and where the paint is stirred to prevent sedimentation and separation of the components of the paint.

[Articles]

An article according to the present invention is an article in which a surface of a substrate as an object to be coated is coated with a coating agent containing the above-mentioned defoamer composition. That is, an article of the present invention is composed of a substrate, and a coating film obtained by coating a surface of the substrate with a coating agent.

(Substrate)

Examples of the substrate of the article according to the present invention include, but are not limited to, substrates made of metal, plastic, wood, rubber, glass, stone, cement, mortar, paper, non-woven fabric, cloth or ceramics.

(Coating Film)

Examples of the coating film included in the article of the present invention include those obtained by applying the above aqueous paint composition to the above substrate and then curing the applied composition. The coating film formed on the surface of the substrate may be a single layer or a laminate of multiple coating films. Since the aqueous paint composition containing the defoamer composition of the present invention is excellent in defoaming properties and shear resistance, satisfactory coating film appearance can be achieved without impairing overcoatability even when the aqueous paint composition is used for applications that require extremely high-quality appearance and overcoatability.

(Coating Agent)

Examples of the coating agent of the present invention used for coating of the above substrate include the above-mentioned aqueous paint composition.

(Method for Producing Article)

The article of the present invention can be produced by applying a coating agent such as the aqueous paint composition of the present invention to the above-mentioned substrate, and then drying and curing the applied coating agent. The method of applying the coating agent is not specifically limited, and examples thereof include spray coating, roll coating, brush coating, curtain coating, bar coating, doctor blade, slit coating, dip coating, flow coating, and the like. The method of curing the coating agent is not specifically limited, and examples thereof include room temperature curing, heat curing, UV curing, and the like.

Further, when multiple coating films (multilayer coating film) are formed on the article of the present invention, the multilayer coating film may include, for example, a coating film (undercoat coating film) obtained by applying the aqueous paint composition of the present invention to the substrate, and a topcoat coating film applied to all or part of a surface of the undercoat coating film. The topcoat paint may be the same as or different from the paint used for the undercoat coating film. Further, when forming a multilayer coating film, the undercoat paint may be completely dried or cured before the topcoat is applied, or the undercoat paint may be incompletely dried or cured before the topcoat is applied to the extent that it is not disturbed by the topcoat coating. Since the aqueous coating composition containing the defoamer composition of the present invention is excellent in overcoatability, good interlayer adhesion is achieved between a coating film obtained by the aqueous coating composition and a topcoat coating film even when the aqueous coating composition is used for applications that require extremely high-quality appearance and overcoatability.

When forming a multilayer coating film on the article of the present invention, the multilayer coating film may be formed by, for example, applying a topcoat paint to all or part of a surface of the coating film obtained by curing an undercoat aqueous paint containing the defoamer composition of the present invention. Alternatively, a topcoat paint may be applied by wet-on-wet coating without curing an undercoat aqueous paint containing the defoamer composition of the present invention, and then the undercoat paint and the topcoat paint may be cured simultaneously. In wet-on-wet coating, preferably, after applying the undercoat aqueous paint containing the defoamer composition of the present invention, natural drying, air blowing or preheat-drying is applied as necessary to remove unnecessary solvent (volatile components such as water and organic solvent) without curing the undercoat aqueous paint, and then the topcoat paint is applied. In particular, preheat-drying is suitable as the method for drying the undercoat aqueous paint.

The methods of applying and curing the topcoat paint are not specifically limited, and the same methods as those described above can be used.

(Applications of Article)

The article of the present invention is particularly suitably used for applications that require high-quality appearance and in coating systems having a multilayer coating film. Examples of such applications include automotive parts, high-class furniture, home appliances, and the like.

Some preferred embodiments of the present invention have been described above, but the present invention is not limited to the aforementioned embodiments. That is, other embodiments or various modifications that would occur to those skilled in the art within the scope of the appended claims should be construed as being within the technical scope of the present invention.

Specifically, the invention includes the following aspects.

(1) A defoamer composition for aqueous paints, the defoamer composition containing: a nonionic surfactant (A) having at least one hydrophilic moiety selected from the group consisting of an ethylene glycol moiety, a polyethylene glycol moiety and a polyhydric alcohol moiety in a molecule, the nonionic surfactant (A) having an HLB of 1 to 16; a polymer (B) which does not have the hydrophilic moiety in a molecule, the polymer (B) having an SP value of 7.5 to 12 and a weight-average molecular weight of 400 to 1,000,000; and organic solid fine particles (C) which are in a solid state in the defoamer composition at 25°C.

(2) The defoamer composition according to (1), wherein the nonionic surfactant (A) is one or more selected from the group consisting of ethylene glycol aliphatic ethers, polyoxyalkylene aliphatic ethers, polyoxyalkylene aromatic ethers, polyoxyalkylene fatty acid esters, alkylene oxide addition derivatives of castor oil, alkylene oxide addition derivatives of hydrogenated castor oil, polyoxyalkylene polyhydric alcohol ethers, polyhydric alcohol fatty acid esters, alkylene oxide addition derivatives of polyhydric alcohol fatty acid esters, polyoxyalkylene alkyl amides, acetylene glycol and derivatives thereof, alkylene oxide addition derivatives of acetylene glycol, polyoxyethylene-polyoxypropylene block copolymers and polyoxyethylene-polyoxypropylene-polyoxyethylene block copolymers.

(3) The defoamer composition according to (1) or (2), wherein the polymer (B) is one or more polymers selected from the group consisting of polyvinyl alkyl ethers, polybutadiene, polybutene, polyisoprene, polyalphaolefins, polyalkyl (meth)acrylates, copolymers of dibasic acid esters, poly(fatty acid vinyl esters) and copolymers of alkyl (meth) acrylates and fatty acid vinyl esters.

(4) The defoamer composition according to any one of (1) to (3), wherein the organic solid fine particles (C) are one or more solid fine particles selected from the group consisting of amide, urea, polyethylene, polyethylene oxide, acid-modified polyethylene and hydrogenated castor oil.

(5) The defoamer composition according (4), wherein the amide is a fatty acid diamide obtained by reacting fatty acids selected from the group consisting of alkyl fatty acids and hydroxy fatty acids and containing at least one hydroxy fatty acid with diamines containing one or more diamines selected from the group consisting of alkylenediamines having 2 to 6 carbon atoms and m-xylylenediamines.

(6) The defoamer composition according to any one of (1) to (5), wherein the organic solid fine particles (C) have a crystal aspect ratio of 1.1 to 100.

(7) The defoamer composition according to any one of (1) to (6), wherein the organic solid fine particles (C) have a peak particle size (mode diameter) of 0.1 μm to 150 μm.

(8) The defoamer composition according to any one of (1) to (7), further containing an organic medium (D) which does not have the hydrophilic moiety in a molecule, and which is liquid at 25°C and other than water, the organic medium (D) having a weight-average molecular weight of less than 400.

(9) The defoamer composition according to (8), wherein the organic medium (D) is one or more selected from the group consisting of hydrocarbon oils, alcohols, glycol ethers and glycol esters.

(10) The defoamer composition according to any one of (1) to (9), wherein the defoamer composition does not contain a silicone compound.

(11) An aqueous paint composition containing: the defoamer composition according to any one of (1) to (10); and an aqueous resin.

(12) An article coated with a coating agent containing the defoamer composition according to any one of (1) to (10).

Examples

The present invention will be specifically described below by using examples. The present invention is not limited to these examples in any manner. In the examples, "%" and "parts" indicate "mass%" and "parts by mass," respectively, unless otherwise specified.

[Preparation of Defoamer Samples]

Defoamer samples E1 to E54 and C1 to C25 were prepared as follows.

(Preparation of Nonionic Surfactant)

In the examples and comparative examples, materials listed in Table 1 below were used as the nonionic surfactant components containing the nonionic surfactant (A). The HLB of the nonionic surfactant was determined by the Griffin method. The materials whose component type are listed as "A" in Table 1 are examples of the nonionic surfactant (A) of the present invention, and the materials listed as "non-A component" are materials that do not fall under the nonionic surfactant (A) of the present invention.

[Table 1]

| Table 1 Materials of Defoamer Samples (Nonionic Surfactant) | | | | |
|---|---|---|---|---|
| Component Type | Materials | Sources | Components | HLB (Griffin Value) |
| A | EMALEX RWIS-305 | Nihon Emulsion Co., Ltd. | PEG-5 hydrogenated castor oil triisostearate | 3.2 |
| A | EMALEX RWIS-330 | Nihon Emulsion Co., Ltd. | PEG-30 hydrogenated castor oil triisostearate | 9.2 |
| A | BLAUNON CW-3 | AOKI OIL INDUSTRIAL Co., Ltd. | PEG-3 hydrogenated castor oil | 4.5 |
| A | EMALEX 1805 | Nihon Emulsion Co., Ltd. | PEG-5 isostearyl ether | 10.7 |
| A | UNILUBE 10MS-250KB | NOF CORPORATION | PPG-34PEG-3 stearyl ether | 1.1 |
| A | EMALEX RWIS-320 | Nihon Emulsion Co., Ltd. | PEG-20 hydrogenated castor oil triisostearate | 7.4 |
| A | EMALEX RWIS-360 | Nihon Emulsion Co., Ltd. | PEG-60 hydrogenated castor oil triisostearate | 12.5 |
| A | UNILUBE 5TP-300KB | NOF CORPORATION | PPG-65PEG-5 pentaerythritol ether | 1.7 |
| A | RHEODOL SP-O30V | Kao Corporation | sorbitan trioleate | 3.3 |
| A | ACETYLENOL E00 | Kawaken Fine Chemicals Co., Ltd. | acetylene glycol | 7.3 |
| A | ACETYLENOL E100 | Kawaken Fine Chemicals Co., Ltd. | acetylene glycol PEG-10 adduct | 15.7 |
| A | ADEKA PLURONIC L-121 | ADEKA CORPORATION | PEG-PPG-PEG block polymer | 1.2 |

(continued)

| Table 1 Materials of Defoamer Samples (Nonionic Surfactant) | | | | |
|---|---|---|---|---|
| Component Type | Materials | Sources | Components | HLB (Griffin Value) |
| A | UNIOX GT-20IS | NOF CORPORATION | PEG-20 glyceryl triisostearate | 10.4 |
| A | EMULGEN 103 | Kao Corporation | PEG-3 lauryl ether | 8.3 |
| non-A component | NONION K-230 | NOF CORPORATION | PEG-30 lauryl ether | 17.5 |
| non-A component | NONION E-230 | NOF CORPORATION | PEG-30 oleyl ether | 16.6 |
| non-A component | NONION S-40 | NOF CORPORATION | PEG-30 stearate | 18.3 |

(Synthesis and Preparation of Polymer)

In the examples and comparative examples, materials listed in Table 2 below were used as the polymer components containing the polymer (B). The materials whose component type are listed as "B" in Table 2 are examples of the polymer (B) of the present invention, and the materials listed as "non-B component" are materials that do not fall under the polymer (B) of the present invention. The following are the synthesis methods for materials whose "Sources" in Table 2 are listed as "Synthesis method described in this application."

<Synthesis of PEVE>

As an example of the polymer (B), polyethylvinyl ether (hereinafter, referred to as "PEVE") was synthesized by the following method. 150 parts of toluene and 3 parts of a boron fluoride diethyl ether complex, diluted to 10% with diethyl ether, as a cationic polymerization initiator, were provided in a 1,000 ml reaction vessel equipped with a stirrer, a reflux condenser, a dropping funnel, a thermometer and a nitrogen gas introduction tube, and heated to 30°C while introducing nitrogen gas. Then, a dropping solution (a) shown below was uniformly added dropwise using a dropping funnel over a period of 120 minutes.

Dropping solution (a)

Ethyl vinyl ether        300 parts
Toluene                  100 parts

30 minutes after the end of dropping of the dropping solution (a), 15 parts of ethanol was added to stop the reaction. After the reaction was completed, the solvent was removed using an evaporator to obtain a polymer (PEVE). The weight-average molecular weight of the synthesized polymer was 3,000 (SP value: 8.6).

<Synthesis of Acrylic Copolymer 1>

95.0 parts of butyl acetate and 159.4 parts of dibutyl fumarate were provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to 140°C (reflux state). A mixture consisting of 28.1 parts of dibutyl fumarate, 187.5 parts of ethyl acrylate, 30.0 parts of 2,2-di(tert-amylperoxy)butane 55% solution and 7.5 parts of 2-ethylhexyl thioglycolate was provided in the above dropping funnel as a dropping solution. Then, while maintaining the internal temperature of the reaction vessel at the reflux state, the above dropping solution was uniformly added dropwise over a period of 120 minutes. After the dropping was completed, the reaction temperature was maintained at the reflux state for 120 minutes to perform the reaction. After the reaction was completed, the solvent was removed using an evaporator to obtain acrylic copolymer 1. The weight-average molecular weight of the synthesized copolymer was 3,500 (SP value: 10.1).

<Synthesis of Polyneodecanoic Acid Vinyl Ester>

104.6 parts of butyl acetate was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to a reflux state of butyl acetate. A mixture consisting of 375.0 parts of vinyl neodecanoate (trade name VeoVa 10: manufactured by HEXION) and 20.5 parts of 2,2-di(tert-amylperoxy)butane 55% solution was provided in the above dropping funnel as a dropping solution. Then, while maintaining the internal temperature of the reaction vessel at the reflux state, the above dropping solution was uniformly added dropwise over a period of 120 minutes. After the dropping was completed, the reaction temperature was maintained at the reflux state for 60 minutes to perform the reaction. After the reaction was completed, the solvent was removed using an evaporator to obtain polyneodecanoic acid vinyl ester. The weight-average molecular weight of the synthesized copolymer was 7,900 (SP value: 9.0).

<Synthesis of Acrylic Copolymer 2>

197.5 parts of an isoparaffin-based solvent (trade name Merveille 30: Idemitsu Kosan Co., Ltd.) was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to 95°C. A mixture consisting of 250.0 parts of lauryl methacrylate, 49.4 parts of isoparaffin-based solvent (trade name Merveille 30: Idemitsu Kosan Co., Ltd.) and 3.1 parts of tert-butyl peroxy-2-ethylhexanoate 40% solution was provided in the above dropping funnel as a dropping solution. Then, while maintaining the internal temperature of the reaction vessel at 95°C, the above dropping solution was uniformly added dropwise over a period of 75 minutes. After the dropping was completed, the reaction temperature was maintained at 95°C for 60 minutes. Then, 0.7 parts of tert-butyl peroxy-2-ethylhexanoate 40% solution was added, and the temperature was maintained at 95°C for 45 minutes. Then, the internal temperature of the reaction vessel was raised to 100°C, and the reaction was performed for 30 minutes. After the reaction was completed, the heating residue was adjusted to 50% using an isoparaffin-based solvent (trade name Merveille 30: Idemitsu Kosan Co., Ltd.) to obtain acrylic copolymer 2. The weight-average molecular weight of the synthesized copolymer was 178,900 (SP value: 9.0).

<Synthesis of Acrylic Copolymer 3>

188.5 parts of an isoparaffin-based solvent (trade name Merveille 30: Idemitsu Kosan Co., Ltd.) was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to 95°C. A mixture consisting of 250.0 parts of lauryl methacrylate, 47.1 parts of isoparaffin-based solvent (trade name Merveille 30: Idemitsu Kosan Co., Ltd.) and 12.5 parts of tert-butyl peroxy-2-ethylhexanoate 40% solution was provided in the above dropping funnel as a dropping solution. Then, while maintaining the internal temperature of the reaction vessel at 95°C, the above dropping solution was uniformly added dropwise over a period of 75 minutes. After the dropping was completed, the reaction temperature was maintained at 95°C for 60 minutes. Then, 0.7 parts of tert-butyl peroxy-2-ethylhexanoate 40% solution was added, and the temperature was maintained at 95°C for 45 minutes. Then, the internal temperature of the reaction vessel was raised to 100°C, and the reaction was performed for 30 minutes. After the reaction was completed, the heating residue was adjusted to 50% using an isoparaffin-based solvent (trade name Merveille 30: Idemitsu Kosan Co., Ltd.) to obtain acrylic copolymer 3. The weight-average molecular weight of the synthesized copolymer was 74,100 (SP value: 9.0).

<Synthesis of Acrylic Copolymer 4>

350.0 parts of methyl propylene glycol was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to 120°C. A mixture consisting of 75.0 parts of acrylic acid, 50.0 parts of styrene, 25.0 parts of tert-amyl peroxy-2-ethylhexanoate 50% solution and 6.3 parts of 2-ethylhexyl thioglycolate was provided in the above dropping funnel as a dropping solution. Then, while maintaining the internal temperature of the reaction vessel at 120°C, the above dropping solution was uniformly added dropwise over a period of 120 minutes. After the dropping was completed, the reaction temperature was maintained at 120°C for 60 minutes. Then, 0.8 parts of tert-amyl peroxy-2-ethylhexanoate 50% solution was added, and the temperature was maintained at 120°C for 30 minutes to perform the reaction. After the reaction was completed, the solvent was removed using an evaporator to obtain acrylic copolymer 4. The weight-average molecular weight of the synthesized copolymer was 3,600 (SP value: 12.4).

<Synthesis of Acrylic Copolymer 5>

200.0 parts of butyl acetate was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to a reflux state of butyl acetate. A mixture consisting of 250.0 parts of ethyl acrylate and 50.0 parts of tert-amyl peroxy-2-ethylhexanoate 50% solution was provided in the above dropping funnel as a dropping solution. Then, while maintaining the internal temperature of the reaction vessel at the reflux state, the above dropping solution was uniformly added dropwise over a period of 100 minutes. After the dropping was completed, the reaction temperature was maintained at the reflux state for 60 minutes. Then, 1.5 parts of tert-amyl peroxy-2-ethylhexanoate 50% solution was added, and the reaction was performed for 30 minutes. After the reaction was completed, the solvent was removed using an evaporator to obtain acrylic copolymer 5. The weight-average molecular weight of the synthesized copolymer was 3,900 (SP value: 10.2).

<Synthesis of Acrylic Copolymer 6>

108.0 parts of butyl acetate was provided in a 1,000 ml reaction vessel equipped with a stirrer, a reflux condenser, a dropping funnel, a thermometer and a nitrogen gas introduction tube. Then, while stirring under a nitrogen gas flow, the internal temperature was raised to a reflux state of butyl acetate. A mixture consisting of 375.0 parts of 2-ethylhexyl acrylate and 17.2 parts of 2,2-di(tert-amylperoxy)butane 55% solution was provided in the above dropping funnel as a dropping solution. Then, while maintaining the internal temperature of the reaction vessel at the reflux state, the above dropping solution was uniformly added dropwise over a period of 120 minutes. After the dropping was completed, the reaction temperature was maintained at the reflux state for 60 minutes to perform the reaction. After the reaction was completed, the solvent was removed using an evaporator to obtain acrylic copolymer 6. The weight-average molecular weight of the synthesized copolymer was 7,800 (SP value: 9.2).

The SP values of the polymers listed in Table 2 were calculated by the Fedors method. The weight-average molecular weight of the polymers listed in Table 2 was measured by using HLC-8320GPC (manufactured by Tosoh Corporation) as a measurement device, using TSKgel GMHxl×2, TSKgel G2500Hxl, TSKgel G2000Hxl and TSKgel guardcolumn (all manufactured by Tosoh Corporation) as columns, and using tetrahydrofuran (THF) as a mobile phase, at a column temperature of 40°C, a flow rate of 1 mL/min, with a RI detector as a detector. The weight-average molecular weights listed in Table 2 were values calculated based on a molecular weight of standard polystyrene in a chromatogram measured by gel permeation chromatography (GPC).

[Table 2]

| Table 2 Materials of Defoamer Samples (Polymer) | | | | | |
|---|---|---|---|---|---|
| Component Type | Materials | Sources | Components | SP value (calculated value) | Weight-average molecular weight |
| B | PEVE | Synthesis method described in this application | polyethyl vinyl ether | 8.6 | 3,000 |
| B | RB810 | JSR Corporation | polybutadiene | 8.5 | 224,700 |
| B | Acrylic Copolymer 1 | Synthesis method described in this application | dibutylfumarate/ethyl acrylate copolymer | 10.1 | 3,500 |
| B | PB B-1000 | Nippon Soda Co., Ltd. | polybutadiene | 8.5 | 3,400 |
| B | LV-7 | ENEOS Corporation | polybutene | 8.0 | 400 |
| B | LV-100 | ENEOS Corporation | polybutene | 8.0 | 800 |
| B | Polyneodecanoic acid vinyl ester | Synthesis method described in this application | polyneodecanoic acid vinyl ester | 9.0 | 7,900 |

(continued)

| Table 2 Materials of Defoamer Samples (Polymer) | | | | | |
|---|---|---|---|---|---|
| Component Type | Materials | Sources | Components | SP value (calculated value) | Weight-average molecular weight |
| B | Durasyn 164 | INEOS Oligmers | polyalphaolefin (polydecene) | 8.4 | 700 |
| B | LB-625 | Sanyo Chemical Industries, Ltd. | polypropylene glycol butyl ether | 8.9 | 3,900 |
| B | Poly ip | Idemitsu Kosan Co., Ltd. | polyisoprene | 8.8 | 8,700 |
| B | Lipolube 400H | Lion Specialty Chemicals CO., LTD. | polyalphaolefin (ethylene/propylene) | 8.2 | 3,100 |
| B | Acrylic Copolymer 2 | Synthesis method described in this application | polylauryl methacrylate | 9.0 | 178,900 |
| B | Acrylic Copolymer 3 | Synthesis method described in this application | polylauryl methacrylate | 9.0 | 74,100 |
| non-B component | Acrylic Copolymer 4 | Synthesis method described in this application | acrylic acid/styrene copolymer | 12.4 | 3,600 |
| non-B component | FS1265-10000cst | Dow Toray Co., Ltd. | fluorine-modified silicone | 7.0 | 20,000 |
| B | Acrylic Copolymer 5 | Synthesis method described in this application | polyethyl acrylate | 10.2 | 3,900 |
| B | LUTONAL I 60 | BASF Corporation | polyisobutyl vinyl ether (PIBVE) containing 20% of solvent naphtha | 8.4 | 149,500 |
| B | PIBVE | Siwei development group, Ltd. | PIBVE containing 40% of isoparaffin | 8.4 | 293,600 |
| B | Acrylic Copolymer 6 | Synthesis method described in this application | poly 2-ethylhexyl acrylate | 9.2 | 7,800 |
| non-B component | MFTG | Nippon Nyukazai CO., LTD. | methyltripropylene glycol | 10.0 | 283 |
| non-B component | KF-96-50CS | Shin-Etsu Chemical Co., Ltd. | polydimethylsiloxane | - | - |

(Production and Preparation of Solid Fine Particles)

In the examples and comparative examples, materials listed in Table 3 below were used as the solid fine particle components containing the organic solid fine particles (C). The materials whose component type are listed as "C" in Table 3 are examples of the organic solid fine particles (C) of the present invention, and the materials listed as "non-C component" are materials that do not fall under the organic solid fine particles (C) of the present invention. The following are the production methods for materials whose "Sources" in Table 3 are listed as "Production method described in this application." Specifically, fine particles OC-1 to OC-18, which are examples of the organic solid fine particles (C), were produced by the following method.

<OC-1>

2 moles of 12-hydroxystearic acid (12-HSA) and 1 mole of hexamethylenediamine were reacted at 190°C for 6 hours under a nitrogen gas flow while removing the generated water to thereby obtain diamide (a1) (step 0). Then, a mixture (fine particle mixture) of 10 parts of diamide (a1) as the fine particle component and 90 parts of Merveille 30 (isoparaffin manufactured by Idemitsu Kosan Co., Ltd.) as the organic medium (D) was heated to 165°C using a heater to heat and dissolve the diamide (a1) in Merveille 30 to thereby obtain a fine particle dissolving solution (step 1). Further, 60 parts of Merveille 30 was provided in a 500 mL vessel, and the above fine particle dissolving solution was introduced into the vessel under stirring, and the mixture was cooled to a temperature after mixing of 97.0°C (step 2). After the mixed solution to which the fine particle dissolving solution has been added was cooled to approximately 30°C, 40 parts of ethanol was added to the mixed solution and stirred (step 3). Then, the temperature of the mixed solution was adjusted to 46.5°C while maintaining the stirring, and the stirring was continued for 12 minutes to obtain a pre-dispersion of fine particles OC-1 (step 4).

<OC-2>

A pre-dispersion of fine particles OC-2 was obtained in the same manner as with OC-1, except that 2 moles of 12-HSA and 1 mole of ethylenediamine were reacted to obtain diamide (a2) in step 0, diamide (a2) was used instead of diamide (a1) in step 1, the fine particle mixture was heated to 155°C in step 1, the mixture was cooled to a temperature after mixing of 88.0°C in step 2, and the temperature of the mixed solution was adjusted to 48.5°C in step 4.

<OC-3>

A pre-dispersion of fine particles OC-3 was obtained in the same manner as with OC-1, except that 2 moles of 12-HSA and 1 mole of 1,4-diaminobutane were reacted to obtain diamide (a3) in step 0, diamide (a3) was used instead of diamide (a1) in step 1, the fine particle mixture was heated to 160°C in step 1, the mixture was cooled to a temperature after mixing of 97.0°C in step 2, and the temperature of the mixed solution was adjusted to 42.0°C in step 4.

<OC-4>

A pre-dispersion of fine particles OC-4 was obtained in the same manner as with OC-3, except that the mixture was cooled to a temperature after mixing of 92.5°C in step 2, and the temperature of the mixed solution was adjusted to 45.3°C in step 4.

<OC-5>

A pre-dispersion of fine particles OC-5 was obtained in the same manner as with OC-1, except that hydrogenated castor oil was used instead of diamide (a1), the fine particle mixture was heated to 95°C in step 1, the mixture was cooled to a temperature after mixing of 53.9°C in step 2, and step 4 was not performed.

<OC-6>

A pre-dispersion of fine particles OC-6 was obtained in the same manner as with OC-1, except that butyl glycol was used as the organic medium (D) in step 1 and step 2, the fine particle mixture was heated to 120°C in step 1 and step 2, the mixture was cooled to a temperature after mixing of 25.0°C in step 2, and step 4 was not performed.

<OC-7>

A pre-dispersion of fine particles OC-7 was obtained in the same manner as with OC-1, except that low density polyethylene oxide (trade name "A-C 629" manufactured by Honeywell Japan Ltd.) was used instead of diamide (a1), the fine particle mixture was heated to 150°C in step 1, the mixture was cooled to a temperature after mixing of 46.7°C in step 2, and step 4 was not performed.

<OC-8>

A pre-dispersion of fine particles OC-8 was obtained in the same manner as with OC-1, except that the mixture was cooled to a temperature after mixing of 47.7°C in step 2, and the temperature of the mixed solution was adjusted to 38.7°C in step 4.

<OC-9>

A pre-dispersion of fine particles OC-9 was obtained in the same manner as with OC-1, except that the mixture was cooled to a temperature after mixing of 44.7°C in step 2, and the temperature of the mixed solution was adjusted to 40.3°C in step 4.

<OC-10>

A pre-dispersion of fine particles OC-10 was obtained in the same manner as with OC-1, except that 2-ethylhexanol was used as the organic medium (D) in step 1 and step 2, the fine particle mixture was heated to 135°C in step 1 and step 2, the mixture was cooled to a temperature after mixing of 51.4°C in step 2, and the temperature of the mixed solution was adjusted to 57.7°C in step 4.

<OC-11>

A pre-dispersion of fine particles OC-11 was obtained in the same manner as with OC-1, except that 2-ethylhexanol was used as the organic medium (D) in step 1 and step 2, the fine particle mixture was heated to 135°C in step 1 and step 2, the mixture was cooled to a temperature after mixing of 45.5°C in step 2, and the temperature of the mixed solution was adjusted to 62.1°C in step 4.

<OC-12>

A pre-dispersion of fine particles OC-12 was obtained in the same manner as with OC-1, except that methyl propylene glycol was used as the organic medium (D) in step 1 and step 2, the fine particle mixture was heated to 110°C in step 1 and step 2, the mixture was cooled to a temperature after mixing of 48.5°C in step 2, and the temperature of the mixed solution was adjusted to 50.4°C in step 4.

<OC-13>

A pre-dispersion of fine particles OC-13 was obtained in the same manner as with OC-2, except that the mixture was cooled to a temperature after mixing of 37.4°C in step 2, and the temperature of the mixed solution was adjusted to 61.3°C in step 4.

<OC-14>

A pre-dispersion of fine particles OC-14 was obtained in the same manner as with OC-1, except that methyl propylene glycol was used as the organic medium (D) in step 1 and step 2, the fine particle mixture was heated to 110°C in step 1 and step 2, the mixture was cooled to a temperature after mixing of 38.5°C in step 2, and the temperature of the mixed solution was adjusted to 57.4°C in step 4.

<OC-15>

A pre-dispersion of fine particles OC-15 was obtained in the same manner as with OC-1, except that, after step 3, instead of step 4, the mixed solution obtained in step 3 was introduced into a bottle, heated to 70°C over a period of 24 hours, and maintained at this temperature for 24 hours, and then the mixture was cooled to 25°C over a period of 24 hours.

<OC-16>

A pre-dispersion of fine particles OC-16 was obtained in the same manner as with OC-1, except that, after step 3, instead of step 4, the mixed solution obtained in step 3 was introduced into a bottle, heated to 80°C over a period of 24 hours, and maintained at this temperature for 24 hours, and then the mixture was cooled to 25°C over a period of 24 hours.

<OC-17>

A pre-dispersion of fine particles OC-17 was obtained in the same manner as with OC-2, except that the mixture was cooled to a temperature after mixing of 45.6°C in step 2, and the temperature of the mixed solution was adjusted to 45.5°C in step 4.

<OC-18>

A pre-dispersion of fine particles OC-18 was obtained in the same manner as with OC-1, except that 2 moles of 12-HSA and 1 mole of m-xylylenediamine were reacted to obtain diamide (a4) in step 0, diamide (a4) was used instead of diamide (a1) in step 1, the fine particle mixture was heated to 150°C in step 1, the mixture was cooled to a temperature after mixing of 46.5°C in step 2, and the temperature of the mixed solution was adjusted to 47.3°C in step 4.

<Measurement of Peak Particle Size>

For the fine particles OC-1 to OC-18 obtained as described above, the peak particle size was measured using a particle size analyzer Microtrac MT-3000 EXII/USVR (manufactured by Microtrac) and Merveille 30 as a stirring solvent. The peak particle size ($\mu$m) of each organic solid fine particle is shown in Table 3.

<Measurement of Aspect Ratio>

For the fine particles OC-1 to OC-18 obtained as above, the aspect ratio was measured as described in 1) to 7) below.

1) The pre-dispersion of the fine particles OC-1 to OC-18 was diluted 300-fold with xylene, and irradiated with ultrasonic waves for 30 seconds to disperse the fine particles in the diluted solution.
2) On filter paper, one drop of the diluted solution of 1) was placed on a copper microgrid (grid pitch 150 $\mu$m) with a carbon-reinforced collodion support film, and allowed to dry naturally.
3) The microgrid on which the fine particle sample obtained in 2) has been placed was fixed to an SEM mount using carbon tape.
4) SEM measurements were performed under the following conditions. Measurement device: SU3500 (manufactured by Hitachi High-Tech Corporation), measurement mode: high vacuum-low acceleration voltage, captured image: backscattered electron image, image magnification: 2,000x, brightness/contrast: auto, focus: manual.
5) Image analysis was performed using image analysis software (ImageJ). After brightness/contrast correction and smoothing correction, images were binarized to remove noise, particles at image boundaries and aggregated particles, and particle analysis was performed.
6) When particles to be measured were composed only of non-convex shapes, particle analysis was performed, in which the aspect ratio (= long diameter value/short diameter value) was calculated from the obtained long and short diameter values of each particle. The average of the aspect ratios of 10 or more particles was used as the aspect ratio of the fine particle sample (fine particles OC-1 to OC-18).
7) When particles to be measured included convex and non-convex shapes, the fiber length was measured using the Freehand Line tool, and the fiber width at the center of the particle was measured using the Straight Line tool, and the aspect ratio (= fiber length value/fiber width value) was calculated. The average of the aspect ratios of 10 or more particles was used as the aspect ratio of the sample.

The above "non-convex shape" means that the area of the particle's convex hull (a region surrounded by a contractible virtual curve) is at least twice the real area. Further, the above "convex shape" means that the area of the particle's convex hull is less than twice the real area. The aspect ratio of each organic solid fine particle is shown in Table 3.

[Table 3]

| Table 3 Materials of Defoamer Samples (solid fine particles) | | | | | |
|---|---|---|---|---|---|
| Component Type | Materials | Sources | Components | Peak particle size / $\mu$m | Aspect ratio |
| C | OC-1 | Production method described in this application | diamide consisting of 12-HSA and hexamethylenediamine | 4.2 | 6.1 |
| C | OC-2 | Production method described in this application | diamide consisting of 12-HSA and ethylenediamine | 17.8 | 9.1 |
| C | OC-3 | Production method described in this application | diamide consisting of 12-HSA and 1,4-diaminobutane | 5.9 | 8.9 |

(continued)

| Table 3 Materials of Defoamer Samples (solid fine particles) | | | | | |
|---|---|---|---|---|---|
| Component Type | Materials | Sources | Components | Peak particle size / $\mu$m | Aspect ratio |
| C | OC-4 | Production method described in this application | Same diamide as OC-3 | 8.7 | 4.1 |
| C | OC-5 | Production method described in this application | hydrogenated castor oil | 3.8 | 10.8 |
| C | OC-6 | Production method described in this application | Same diamide as OC-1 | 18.4 | 1.3 |
| C | OC-7 | Production method described in this application | low density polyethylene oxide A-C 629 manufactured by Honeywell Japan Ltd. | 2.5 | 1.5 |
| C | OC-8 | Production method described in this application | Same diamide as OC-1 | 19.3 | 2.1 |
| C | OC-9 | Production method described in this application | Same diamide as OC-1 | 41.8 | 2.0 |
| C | OC-10 | Production method described in this application | Same diamide as OC-1 | 6.1 | 11.2 |
| C | OC-11 | Production method described in this application | Same diamide as OC-1 | 2.9 | 13.9 |
| C | OC-12 | Production method described in this application | Same diamide as OC-1 | 17.5 | 24.4 |
| C | OC-13 | Production method described in this application | Same diamide as OC-2 | 89.0 | 12.7 |
| C | OC-14 | Production method described in this application | Same diamide as OC-1 | 70.5 | 18.6 |
| C | OC-15 | Production method described in this application | Same diamide as OC-1 | 127.6 | 44.5 |
| C | OC-16 | Production method described in this application | Same diamide as OC-1 | 142.3 | 48.9 |
| C | OC-17 | Production method described in this application | Same diamide as OC-2 | 16.0 | 4.7 |
| C | OC-18 | Production method described in this application | Diamide consisting of 12-HSA and meta-xylylenediamine | 5.9 | 8.9 |

(continued)

| Table 3 Materials of Defoamer Samples (solid fine particles) | | | | | |
|---|---|---|---|---|---|
| Component Type | Materials | Sources | Components | Peak particle size / $\mu$m | Aspect ratio |
| non-C component | Sylophobic 100 | Fuji Silysia Chemical LTD. | hydrophobic silica | - | - |
| non-C component | Nipsil SS-30P | Tosoh Silica Corporation | hydrophobic silica | - | - |

(Preparation of Organic Medium)

In the examples and comparative examples, materials listed in Table 4 below were used as the organic medium (D). Table 4 shows the boiling points of some of the materials.

[Table 4]

| Table 4 Materials of Defoamer Samples (organic medium) | | | | |
|---|---|---|---|---|
| Component Type | Materials | Sources | Components | **Boiling point** / °C |
| D | Merveille 30 | Idemitsu Kosan Co., Ltd. | isoparaffin | 184-199 |
| D | Ethanol | Sojitz Corporation | ethanol | 78 |
| D | 2-Ethyl hexanol | Mitsubishi Chemical Corporation | 2-ethyl hexanol | 184 |
| D | Methyl propylene glycol | Dow Toray Co., Ltd. | methyl propylene glycol | 121 |
| D | Butyl glycol | KH Neochem Co., Ltd. | butyl glycol | 171 |
| D | Solvent naphtha | BASF Corporation | naphtha (solvent containing LUTONAL I 60) | - |
| D | Isoparaffin | Siwei development group, Ltd. | isoparaffin (solvent containing PIBVE manufacured by Siwei) | - |
| D | Cosmo Pure Spin G | Cosmo Oil Lubricants Co., LTD. | hydrogen-purified paraffin | 241 (initial boiling point) |
| D | Methyl isobutyl ketone | KH Neochem Co., Ltd. | methyl isobutyl ketone | 116 |

(Preparation of Test Samples)

Defoamer samples E1 to E54 and C1 to C25 were prepared by the methods described below. Details of the preparation method for each defoamer sample are as follows.

<Defoamer Sample E1>

7.5 parts of EMALEX RWIS-305 (PEG-5 hydrogenated castor oil triisostearate manufactured by Nihon Emulsion Co., Ltd.) and 27.5 parts of PEVE were provided in a 100 mL polycup, to which 30.0 parts of a pre-dispersion of fine particles OC-1 was added while being stirred with a disperser. Then, the mixture was stirred and mixed at 2,000 rpm for 15 minutes to obtain defoamer sample E1.

<Defoamer Sample E2>

Defoamer sample E2 was obtained in the same manner as with defoamer sample E1, except that the pre-dispersion of fine particles OC-1 was changed to a pre-dispersion of fine particles OC-2.

<Defoamer Sample E3>

Defoamer sample E3 was obtained in the same manner as with defoamer sample E1, except that the pre-dispersion of fine particles OC-1 was changed to a pre-dispersion of fine particles OC-3.

<Defoamer Sample E4>

Defoamer sample E4 was obtained in the same manner as with defoamer sample E1, except that EMALEX RWIS-305 was changed to EMALEX RWIS-330 (PEG-30 hydrogenated castor oil triisostearate manufactured by Nihon Emulsion Co., Ltd.).

<Defoamer Sample E5>

Defoamer sample E5 was obtained in the same manner as with defoamer sample E1, except that EMALEX RWIS-305 was changed to BLAUNON CW-3 (PEG-3 hydrogenated castor oil manufactured by Aoki Oil Industrial Co., Ltd.).

<Defoamer Sample E6>

Defoamer sample E6 was obtained in the same manner as with defoamer sample E2, except that EMALEX RWIS-305 was changed to BLAUNON CW-3 (PEG-3 hydrogenated castor oil manufactured by Aoki Oil Industrial Co., Ltd.).

<Defoamer Sample E7>

Defoamer sample E7 was obtained in the same manner as with defoamer sample E3, except that EMALEX RWIS-305 was changed to BLAUNON CW-3 (PEG-3 hydrogenated castor oil manufactured by Aoki Oil Industrial Co., Ltd.).

<Defoamer Samples E8 to E18>

Defoamer samples E8 to E18 were obtained in the same manner as with defoamer sample E1, except that EMALEX RWIS-305 was changed to "A: nonionic surfactant" listed in Table 6, and polymer (B) was changed to Durasyn 164.

<Defoamer Sample E19>

Defoamer sample E19 was obtained in the same manner as with defoamer sample E1, except that 27.5 parts of PEVE was changed to 10.3 parts of PEVE and 3.4 parts of RB 810, and the polymer (PEVE and RB 810) was diluted with 13.8 parts of Merveille 30 before mixing with EMALEX RWIS-305 and a pre-dispersion of fine particles OC-1.

<Defoamer Sample E20>

Defoamer sample E20 was obtained in the same manner as with defoamer sample E1, except that 27.5 parts of PEVE was changed to 22.0 parts of acrylic copolymer 1, and the polymer (acrylic copolymer 1) was diluted with 5.5 parts of 2-ethylhexanol before mixing with EMALEX RWIS-305 and a pre-dispersion of fine particles OC-10.

<Defoamer Samples E21, E22 and E24 to E26>

Defoamer samples E21, E22 and E24 to E26 were obtained in the same manner as with defoamer sample E1, except that PEVE was changed to "B: polymer" listed in Table 7.

<Defoamer Sample E23>

Defoamer sample E23 was obtained in the same manner as with defoamer sample E1, except that EMALEX RWIS-305 was changed to EMALEX RWIS-320 (PEG-20 hydrogenated castor oil triisostearate manufactured by Nihon Emulsion Co., Ltd.), and PEVE was changed to polyneodecanoic acid vinyl ester.

<Defoamer Sample E27>

Defoamer sample E27 was obtained in the same manner as with defoamer sample E1, except that 27.5 parts of PEVE was changed to 27.5 parts of Merveille 30 (solvent) solution of acrylic copolymer 2 (polymer concentration: 50 mass%), and mixed with EMALEX RWIS-305 and a pre-dispersion of fine particles OC-1.

<Defoamer Sample E28>

Defoamer sample E28 was obtained in the same manner as with defoamer sample E1, except that 27.5 parts of PEVE was changed to 27.5 parts of Merveille 30 (solvent) solution of acrylic copolymer 3 (polymer concentration: 50 mass%), and mixed with EMALEX RWIS-305 and a pre-dispersion of fine particles OC-1.

<Defoamer Sample E29>

Defoamer sample E29 was obtained in the same manner as with defoamer sample E1, except that 27.5 parts of PEVE was changed to 18.6 parts of LUTONAL I 60 (solvent naphtha solution with PIBVE concentration of 80 mass%), which is polyisobutyl vinyl ether (PIBVE) manufactured by BASF, and the polymer (LUTONAL I 60) was diluted with 8.9 parts of Merveille 30 before mixing with EMALEX RWIS-305 and a pre-dispersion of fine particles OC-1.

<Defoamer Sample E30>

Defoamer sample E30 was obtained in the same manner as with defoamer sample E1, except that 27.5 parts of PEVE was changed to 11.5 parts of LUTONAL I 60 (solvent naphtha solution with PIBVE concentration of 80 mass%), and the polymer (LUTONAL I 60) was diluted with 16.0 parts of Merveille 30 before mixing with EMALEX RWIS-305 and a pre-dispersion of fine particles OC-1.

<Defoamer Sample E31>

Defoamer sample E31 was obtained in the same manner as with defoamer sample E1, except that 27.5 parts of PEVE was changed to 15.3 parts of PIBVE (isoparaffin solution with PIBVE concentration of 60 mass%) manufactured by Siwei, and the polymer (PIBVE manufactured by Siwei) was diluted with 12.2 parts of Merveille 30 before mixing with EMALEX RWIS-305 and a pre-dispersion of fine particles OC-1.

<Defoamer Samples E32 to E44>

Defoamer samples E32 to E44 were obtained in the same manner as with defoamer sample E1, except that the pre-dispersion of fine particles OC-1 was changed to "C: organic solid fine particles (fine particles OC-4 to OC-16)" listed in Table 8.

<Defoamer Sample E45>

Defoamer sample E45 was obtained in the same manner as with defoamer sample E1, except that 27.5 parts of PEVE was changed to 22.0 parts of acrylic copolymer 5, and the polymer (acrylic copolymer 5) was diluted with 5.5 parts of 2-ethylhexanol before mixing with EMALEX RWIS-305 and a pre-dispersion of fine particles OC-10.

<Defoamer Samples E46 to E54>

Defoamer samples E46 to E54 were obtained in the same manner as with defoamer sample E1, except that EMALEX RWIS-305 was changed to "A: nonionic surfactant" listed in Table 9, PEVE was changed to "B: polymer" listed in Table 9, and the pre-dispersion of fine particles OC-1 was changed to "C: organic solid fine particles" listed in Table 9.

<Defoamer Sample C1>

Defoamer sample C1 was obtained in the same manner as with defoamer sample E1, except that Merveille 30 was used instead of the pre-dispersion of fine particles OC-1.

<Defoamer Sample C2>

Defoamer sample C2 was obtained in the same manner as with defoamer sample E4, except that Merveille 30 was used instead of the pre-dispersion of fine particles OC-1.

<Defoamer Sample C3>

Defoamer sample C3 was obtained in the same manner as with defoamer sample E5, except that Merveille 30 was used instead of the pre-dispersion of fine particles OC-1.

<Defoamer Sample C4>

Defoamer sample C4 was obtained in the same manner as with defoamer sample E1, except that Merveille 30 was used instead of the EMALEX RWIS-305 and PEVE.

<Defoamer Sample C5>

Defoamer sample C5 was obtained in the same manner as with defoamer sample E2, except that Merveille 30 was used instead of the EMALEX RWIS-305 and PEVE.

<Defoamer Sample C6>

Defoamer sample C6 was obtained in the same manner as with defoamer sample E3, except that Merveille 30 was used instead of the EMALEX RWIS-305 and PEVE.

<Defoamer Sample C7>

As defoamer sample C7, BYK-024 (manufactured by BYK), which is a mixture of silicone, hydrophobic fine particles and polyglycol, was used.

<Defoamer Sample C8>

As defoamer sample C8, Agitan 295 (manufactured by MUNZING CHEMIE GmbH), which is a mixture of hydrocarbon, hydrophobic silica and alkoxy compounds, was used.

<Defoamer Samples C9 to C14 and C18>

Defoamer samples C9 to C14 and C18 were obtained in the same manner as with defoamer sample E1, except that EMALEX RWIS-305 was changed to "A: nonionic surfactant" or "nonionic surfactant (non-A component)" listed in Table 11, and PEVE was changed to "B:polymer" or "polymer (non-B component)" listed in Table 11.

<Defoamer Sample C15>

Defoamer sample C15 was obtained in the same manner as with defoamer sample E1, except that 27.5 parts of PEVE was changed to 13.8 parts of acrylic copolymer 4, and the polymer (acrylic copolymer 4) was diluted with 13.7 parts of methyl propylene glycol before mixing with EMALEX RWIS-305 and a pre-dispersion of fine particles OC-1.

<Defoamer Sample C16>

Defoamer sample C16 was obtained in the same manner as with defoamer sample E1, except that EMALEX RWIS-305 was changed to EMALEX RWIS-330 (PEG-30 hydrogenated castor oil triisostearate manufactured by Nihon Emulsion Co., Ltd.), 27.5 parts of PEVE was changed to 13.8 parts of acrylic copolymer 4, and the polymer (acrylic copolymer 4) was diluted with 13.7 parts of methyl propylene glycol before mixing with EMALEX RWIS-330 and a pre-dispersion of fine particles OC-1.

<Defoamer Sample C17>

13.0 parts of FS1265-10,000 cst (fluorine-modified silicone manufactured by Dow Toray Co., Ltd.) was diluted with 32.5 parts of methyl isobutyl ketone to obtain a polymer dilution. Then, 6.5 parts of EMALEX RWIS-305 and the above polymer dilution were provided in a 100 mL polycup, to which 13.0 parts of a pre-dispersion of fine particles OC-1 was added while being stirred with a disperser. Then, the mixture was stirred and mixed at 2,000 rpm for 15 minutes to obtain defoamer sample C17.

<Defoamer Sample C19>

7.4 parts of EMALEX RWIS-305, 27.2 parts of Durasyn 164 (polyalphaolefin manufactured by INEOS Oligomers, B component) and 0.7 parts of KF-96-50CS (polydimethylsiloxane manufactured by Shin-Etsu Chemical Co., Ltd., non-B component) were provided in a 100 mL polycup, to which 29.7 parts of a pre-dispersion of fine particles OC-1 was added while being stirred with a disperser. Then, the mixture was stirred and mixed at 2,000 rpm for 15 minutes to obtain defoamer sample C19.

<Defoamer Sample C20>

1.2 parts of Sylophobic 100 (hydrophobic silica manufactured by Fuji Silysia Chemical Ltd., non-C component), 5.8 parts of Nipsil SS-30P (hydrophobic silica manufactured by Tosoh Silica Corporation, non-C component) and 93.0 parts of Cosmo Pure Spin G (hydrogen-purified paraffin manufactured by Cosmo Oil Lubricants Co., Ltd.) were provided in a 100 mL polycup, and the mixture was stirred and mixed at 3,500 rpm for 15 minutes to obtain defoamer sample C20 (silica-containing defoamer). For Sylophobic 100 and Nipsil SS-30P, a methanol wetting value (M value) and a volume-average particle size were measured. The M value represents the degree of hydrophobicity, and the higher the M value, the lower the hydrophilicity. The M value is expressed as the volume fraction of the minimum amount of methanol required to uniformly disperse hydrophobic fine particles in a mixture of water and methanol. The M value was determined by the following method. 0.2 g of a measurement sample (Sylophobic 100 and Nipsil SS-30P) was added to 50 mL of water in a 250 mL beaker, and then methanol was added dropwise from a burette until the entire amount of the measurement sample was suspended. During this process, the solution in the beaker was stirred constantly with a magnetic stirrer, and the endpoint was defined as the point at which the entire amount of the measurement sample was uniformly suspended in the solution. The volume percentage of methanol in the liquid mixture in the beaker at the endpoint was used as the M value. For the volume-average particle size, 50% integrated volume-average particle size was measured using Microtrac MT-3000 EXII/USVR laser diffraction particle size analyzer with 2-propanol stirred. The M value and the volume-average particle size of Sylophobic 100 and Nipsil SS-30P measured as described above are as follows.

Sylophobic 100
M value: 60, volume-average particle size: 2.4 μm
Nipsil SS-30P
M value: 60, volume-average particle size: 17.5 μm

<Defoamer Sample C21>

3.4 parts of EMALEX RWIS-305, 12.5 parts of Durasyn 164 were provided in a 100 mL polycup, to which 13.6 parts of a pre-dispersion of fine particles OC-1 and 9.7 parts of defoamer sample C20 were added while being stirred with a disperser. Then, the mixture was stirred and mixed at 2,000 rpm for 15 minutes to obtain defoamer sample C21.

<Defoamer Sample C22>

3.4 parts of EMALEX RWIS-305, 12.5 parts of Durasyn 164, 10.2 parts of Merveille 30 and 2.8 parts of ethanol were provided in a 100 mL polycup, to which 9.7 parts of defoamer sample C20 was added while being stirred with a disperser. Then, the mixture was stirred and mixed at 2,000 rpm for 15 minutes to obtain defoamer sample C22.

<Defoamer Sample C23>

1.2 parts of Sylophobic 100 (hydrophobic silica manufactured by Fuji Silysia Chemical Ltd., non-C component), 5.8 parts of Nipsil SS-30P (hydrophobic silica manufactured by Tosoh Silica Corporation, non-C component), 73.4 parts of Merveille 30 and 19.6 parts of ethanol were provided, and the mixture was stirred and mixed at 2,000 rpm for 15 minutes to prepare a silica slurry. Then, 4.6 parts of EMALEX RWIS-305, 16.9 parts of Durasyn 164, 13.8 parts of Merveille 30 and 3.7 parts of ethanol were provided in a 100 mL polycup, to which 13.1 parts of the silica slurry was added while being stirred with a disperser. Then, the mixture was stirred and mixed at 2,000 rpm for 15 minutes to obtain defoamer sample C23.

<Defoamer Sample C24>

A silica slurry was prepared in the same manner as with defoamer sample C23, and then 4.6 parts of EMALEX RWIS-305 and 16.9 parts of Durasyn 164 were provided in a 100 mL polycup, to which 18.5 parts of a pre-dispersion of fine particles OC-1 and 13.1 parts of the silica slurry were added while being stirred with a disperser. Then, the mixture was stirred and mixed at 2,000 rpm for 15 minutes to obtain defoamer sample C24.

<Defoamer Sample C25>

7.5 parts of EMALEX RWIS-305, 27.5 parts of Durasyn 164, 24.0 parts of Merveille 30 and 6.0 parts of ethanol were provided in a 100 mL polycup, and the mixture was stirred and mixed at 2,000 rpm for 15 minutes to obtain defoamer sample C25.

The compositions of the defoamer samples prepared as described above are shown in Tables 5 to 11 below.

[Table 5]

| Table 5 Compositions of Defoamer Samples (Examples E1 to E7) | | | | | | | | |
|---|---|---|---|---|---|---|---|---|
| Defoamer sample No. (Examples) | | E1 | E2 | E3 | E4 | E5 | E6 | E7 |
| Component Type | Component Name | Formulation amount / % | | | | | | |
| A: Nonionic Surfactant | EMALEX RWIS-305 | 11.5 | 11.5 | 11.5 | | | | |
| | EMALEX RWIS-330 | | | | 11.5 | | | |
| | BLAUNON CW-3 | | | | | 11.5 | 11.5 | 11.5 |
| B: Polymer | polyethyl vinyl ether PEVE | 42.3 | 42.3 | 42.3 | 42.3 | 42.3 | 42.3 | 42.3 |
| C: Organic Solid Fine Particle | Fine particle OC-1 | 2.3 | | | 2.3 | 2.3 | | |
| | Fine particle OC-2 | | 2.3 | | | | 2.3 | |
| | Fine particle OC-3 | | | 2.3 | | | | 2.3 |
| D: Organic Medium | Merveille 30 | 34.6 | 34.6 | 34.6 | 34.6 | 34.6 | 34.6 | 34.6 |
| | Ethanol | 9.3 | 9.3 | 9.3 | 9.3 | 9.3 | 9.3 | 9.3 |
| Total of defoa | mer compositions / % | 100.0 | 100.0 | 100.0 | 100.0 | 100.0 | 100.0 | 100.0 |

[Table 6]

| Table 6 Compositions of Defoamer Samples (Examples E8 to E18) | | | | | | | | | | | | |
|---|---|---|---|---|---|---|---|---|---|---|---|---|
| Defoamer sample No. (Examples) | | E8 | E9 | E10 | E11 | E12 | E13 | E14 | E15 | E16 | E17 | E18 |
| Component Type | Component Name | Formulation amount / % | | | | | | | | | | |
| A: Nonionic Surfactant | EMALEX 1805 | 11.5 | | | | | | | | | | |
| | UNILUBE 10MS-250KB | | 11.5 | | | | | | | | | |
| | EMALEX RWIS-320 | | | 11.5 | | | | | | | | |
| | EMALEX RWIS-360 | | | | 11.5 | | | | | | | |
| | UNILUBE 5TP-300KB | | | | | 11.5 | | | | | | |
| | RHEODOL SP-O30V | | | | | | 11.5 | | | | | |
| | ACETYLENOL E00 | | | | | | | 11.5 | | | | |
| | ACETYLENOL E100 | | | | | | | | 11.5 | | | |
| | ADEKA PLURONIC L-121 | | | | | | | | | 11.5 | | |
| | UNIOX GT-20IS | | | | | | | | | | 11.5 | |
| | EMULGEN 103 | | | | | | | | | | | 11.5 |
| B: Polymer | polyalphaolefin Durasyn 164 | 42.3 | 42.3 | 42.3 | 42.3 | 42.3 | 42.3 | 42.3 | 42.3 | 42.3 | 42.3 | 42.3 |
| C: Organic Solid Fine Particle | Fine particle OC-1 | 2.3 | 2.3 | 2.3 | 2.3 | 2.3 | 2.3 | 2.3 | 2.3 | 2.3 | 2.3 | 2.3 |
| D: Organic Medium | Merveille 30 | 34.6 | 34.6 | 34.6 | 34.6 | 34.6 | 34.6 | 34.6 | 34.6 | 34.6 | 34.6 | 34.6 |
| Others | Ethanol | 9.3 | 9.3 | 9.3 | 9.3 | 9.3 | 9.3 | 9.3 | 9.3 | 9.3 | 9.3 | 9.3 |
| Total of defoamer compositions / % | | 100.0 | 100.0 | 100.0 | 100.0 | 100.0 | 100.0 | 100.0 | 100.0 | 100.0 | 100.0 | 100.0 |

[Table 7]

Table 7 Compositions of Defoamer Samples (Examples E19 to E31)

| Defoamer sample No. (Examples) | | E19 | E20 | E21 | E22 | E23 | E24 | E25 | E26 | E27 | E28 | E29 | E30 | E31 |
|---|---|---|---|---|---|---|---|---|---|---|---|---|---|---|
| Component Type | Component Name | Formulation amount / % | | | | | | | | | | | | |
| A: Nonionic Surfactant | EMALEX RWIS-305 | 11.5 | 11.5 | 11.5 | 11.5 | | 11.5 | 11.5 | 11.5 | 11.5 | 11.5 | 11.5 | 11.5 | 11.5 |
| | EMALEX RWIS-320 | | | | | 11.5 | | | | | | | | |
| B: Polymer | polyethyl vinyl ether PEVE | 15.8 | | | | | | | | | | | | |
| | polybutadiene RB810 | 5.3 | | | | | | | | | | | | |
| | Acrylic Copolymer 1 | | 33.8 | | | | | | | | | | | |
| | polybutadiene B-1000 | | | 42.3 | | | | | | | | | | |
| | polybutene LV-7 | | | | 42.3 | | | | | | | | | |
| | Polyneodecanoic acid vinyl ester | | | | | 42.3 | | | | | | | | |
| | polyalphaolefin Dura-syn 164 | | | | | | 42.3 | | | | | | | |
| | polyisoprene Poly ip | | | | | | | 42.3 | | | | | | |
| | polyalphaolefin Lipolube 400H | | | | | | | | 42.3 | | | | | |
| | Acrylic Copolymer 2 | | | | | | | | | 21.1 | | | | |
| | Acrylic Copolymer 3 | | | | | | | | | | 21.1 | | | |
| | PIBVE LUTONAL I 60 | | | | | | | | | | | 22.8 | 14.1 | |
| | PIBVE (Siwei製) | | | | | | | | | | | | | 14.1 |
| C: Organic Solid Fine Particle | Fine particle OC-1 | 2.3 | | 2.3 | 2.3 | 2.3 | 2.3 | 2.3 | 2.3 | 2.3 | 2.3 | 2.3 | 2.3 | 2.3 |
| | Fine particle OC-10 | | 2.3 | | | | | | | | | | | |

EP 4 552 718 A1

(continued)

| Table 7 Compositions of Defoamer Samples (Examples E19 to E31) | | | | | | | | | | | | | | |
|---|---|---|---|---|---|---|---|---|---|---|---|---|---|---|
| Defoamer sample No. (Examples) | | E19 | E20 | E21 | E22 | E23 | E24 | E25 | E26 | E27 | E28 | E29 | E30 | E31 |
| Component Type | Component Name | Formulation amount / % | | | | | | | | | | | | |
| D: Organic Medium | Merveille 30 | 55.8 | | 34.6 | 34.6 | 34.6 | 34.6 | 34.6 | 34.6 | 55.8 | 55.8 | 48.3 | 59.2 | 53.4 |
| | Ethanol | 9.3 | 9.3 | 9.3 | 9.3 | 9.3 | 9.3 | 9.3 | 9.3 | 9.3 | 9.3 | 9.3 | 9.3 | 9.3 |
| | 2-Ethyl hexanol | | 43.1 | | | | | | | | | | | |
| | Solvent naphtha (Containing LUTONAL I 60) | | | | | | | | | | | 5.8 | 3.6 | |
| | Isoparaffin (Containing PIBVE by Siwei) | | | | | | | | | | | | | 9.4 |
| Total of defoamer compositions / % | | 100.0 | 100.0 | 100.0 | 100.0 | 100.0 | 100.0 | 100.0 | 100.0 | 100.0 | 100.0 | 100.0 | 100.0 | 100.0 |

[Table 8]

| Table 8 Compositions of Defoamer Samples (Examples E32 to E44) | | | | | | | | | | | | | | |
|---|---|---|---|---|---|---|---|---|---|---|---|---|---|---|
| Defoamer sample No. (Examples) | | E32 | E33 | E34 | E35 | E36 | E37 | E38 | E39 | E40 | E41 | E42 | E43 | E44 |
| Component Type | Component Name | Formulation amount / % | | | | | | | | | | | | |
| A: Nonionic Surfactant | EMALEX RWIS-305 | 11.5 | 11.5 | 11.5 | 11.5 | 11.5 | 11.5 | 11.5 | 11.5 | 11.5 | 11.5 | 11.5 | 11.5 | 11.5 |
| B: Polymer | polyalphaolefin Durasyn 164 | 42.3 | 42.3 | 42.3 | 42.3 | 42.3 | 42.3 | 42.3 | 42.3 | 42.3 | 42.3 | 42.3 | 42.3 | 42.3 |
| C: Organic Solid Fine Particle | Fine particle OC-4 | 2.3 | | | | | | | | | | | | |
| | Fine particle OC-5 | | 2.3 | | | | | | | | | | | |
| | Fine particle OC-6 | | | 2.3 | | | | | | | | | | |
| | Fine particle OC-7 | | | | 2.3 | | | | | | | | | |
| | Fine particle OC-8 | | | | | 2.3 | | | | | | | | |
| | Fine particle OC-9 | | | | | | 2.3 | | | | | | | |
| | Fine particle OC-10 | | | | | | | 2.3 | | | | | | |
| | Fine particle OC-11 | | | | | | | | 2.3 | | | | | |
| | Fine particle OC-12 | | | | | | | | | 2.3 | | | | |
| | Fine particle OC-13 | | | | | | | | | | 2.3 | | | |
| | Fine particle OC-14 | | | | | | | | | | | 2.3 | | |
| | Fine particle OC-15 | | | | | | | | | | | | 2.3 | |
| | Fine particle OC-16 | | | | | | | | | | | | | 2.3 |
| D: Organic Medium | Merveille 30 | 34.6 | 34.6 | | 34.6 | 34.6 | 34.6 | | | | 34.6 | | 34.6 | 34.6 |
| | Ethanol | 9.3 | 9.3 | | 9.3 | 9.3 | 9.3 | 9.3 | 9.3 | 9.3 | 9.3 | 9.3 | **9.3** | 9.3 |
| | Butyl glycol | | | 43.9 | | | | | | | | | | |
| | 2-Ethyl hexanol | | | | | | | 34.6 | 34.6 | | | | | |
| | Methyl propylene glycol | | | | | | | | | 34.6 | | 34.6 | | |

EP 4 552 718 A1

36

(continued)

| Table 8 Compositions of Defoamer Samples (Examples E32 to E44) | | | | | | | | | | | | | | |
|---|---|---|---|---|---|---|---|---|---|---|---|---|---|---|
| Defoamer sample No. (Examples) | | E32 | E33 | E34 | E35 | E36 | E37 | E38 | E39 | E40 | E41 | E42 | E43 | E44 |
| Component Type | Component Name | Formulation amount / % | | | | | | | | | | | | |
| Total of defoamer compositions / % | | 100.0 | 100.0 | 100.0 | 100.0 | 100.0 | 100.0 | 100.0 | 100.0 | 100.0 | 100.0 | 100.0 | 100.0 | 100.0 |

[Table 9]

| Table 9 Compositions of Defoamer Samples (Examples E45 to E54) | | | | | | | | | | | | |
|---|---|---|---|---|---|---|---|---|---|---|---|---|
| Defoamer sample No. (Examples) | | E45 | E46 | E47 | E48 | E49 | E50 | E51 | E52 | E53 | E54 |
| Component Type | Component Name | Formulation amount / % | | | | | | | | | |
| A: Nonionic Surfactant | EMALEX RWIS-305 | 11.5 | | | 11.5 | | 11.5 | | | 11.5 | 11.5 |
| | EMALEX RWIS-320 | | | | | 11.5 | | 11.5 | | | |
| | EMALEX RWIS-360 | | 11.5 | 11.5 | | | | | 11.5 | | |
| B: Polymer | Acrylic Copolymer 5 | 33.8 | | | | | | | | | |
| | polybutene LV-7 | | 42.3 | | | | | | | | |
| | Polyneodecanoic acid vinyl ester | | | 42.3 | | | | | | | |
| | polybutadiene RB810 | | | | 8.5 | | | | | | |
| | polypropylene glycol butyl ether LB-625 | | | | | 42.3 | | | | | |
| | polybutene LV-100 | | | | | | 42.3 | | | | |
| | Acrylic Copolymer 6 | | | | | | | 42.3 | | | |
| | polyethyl vinyl ether PEVE | | | | | | | | 42.3 | | |
| | polyalphaolefin Durasyn 164 | | | | | | | | | 42.3 | 42.3 |
| C: Organic Solid Fine Particle | Fine particle OC-1 | | 2.3 | 2.3 | 2.3 | 2.3 | 2.3 | 2.3 | 2.3 | | |
| | Fine particle OC-10 | 2.3 | | | | | | | | | |
| | Fine particle OC-17 | | | | | | | | | 2.3 | |
| | Fine particle OC-18 | | | | | | | | | | 2.3 |
| D: Organic Medium | Merveille 30 | | 34.6 | 34.6 | 68.4 | 34.6 | 34.6 | 34.6 | 34.6 | 34.6 | 34.6 |
| | Ethanol | 9.3 | 9.3 | 9.3 | 9.3 | 9.3 | 9.3 | 9.3 | 9.3 | 9.3 | 9.3 |
| | 2-Ethyl hexanol | 43.1 | | | | | | | | | |
| Total of defoamer compositions / % | | 100.0 | 100.0 | 100.0 | 100.0 | 100.0 | 100.0 | 100.0 | 100.0 | 100.0 | 100.0 |

EP 4 552 718 A1

38

[Table 10]

| Table 10 Compositions of Defoamer Samples (Comparative Examples C1 to C8) | | | | | | | | | |
|---|---|---|---|---|---|---|---|---|---|
| Defoamer sample No. (Comparative Examples) | | C1 | C2 | C3 | C4 | C5 | C6 | C7 | C8 |
| Component Type | Component Name | Formulation amount / % | | | | | | | |
| A: Nonionic Surfactant | EMALEX RWIS-305 | 11.5 | | | | | | | |
| | EMALEX RWIS-330 | | 11.5 | | | | | | |
| | BLAUNON CW-3 | | | 11.5 | | | | | |
| B: Polymer | polyethyl vinyl ether PEVE | 42.3 | 42.3 | 42.3 | | | | | |
| C: Organic Solid Fine Particle | Fine particle OC-1 | | | | 2.3 | | | | |
| | Fine particle OC-2 | | | | | 2.3 | | | |
| | Fine particle OC-3 | | | | | | 2.3 | | |
| D: Organic Medium | Merveille 30 | 46.2 | 46.2 | 46.2 | 88.4 | 88.4 | 88.4 | | |
| | Ethanol | | | | 9.3 | 9.3 | 9.3 | | |
| Defoamer containing silicone and hydrophobic fine particles (BYK-024) | | | | | | | | 100.0 | |
| Non-silicone defoamer containing hydrophobic fine particles (Agitan295) | | | | | | | | | 100.0 |
| Total of defoamer compositions / % | | 100.0 | 100.0 | 100.0 | 100.0 | 100.0 | 100.0 | 100.0 | 100.0 |

[Table 11]

Table 11 Compositions of Defoamer Samples (Comparative Examples C9 to C25

| Defoamer sample No. (Comparative Examples) | | C9 | C10 | C11 | C12 | C13 | C14 | C15 | C16 | C17 I | C18 I | C19 | C20 | C21 | C22 | C23 | C24 | C25 |
|---|---|---|---|---|---|---|---|---|---|---|---|---|---|---|---|---|---|---|
| Component Type | Component Name | Formulation amount / % | | | | | | | | | | | | | | | | |
| A: Nonionic Surfactant | EMALEX RWIS-305 | | | | | | | 11.5 | | 10.0 | | 11.4 | | 8.7 | 8.8 | 8.8 | 8.7 | 11.5 |
| | EMALEX RWIS-330 | | | | | | | | 11.5 | | 11.5 | | | | | | | |
| Nonionic Surfactant (non-A component) | NONION K-230 | 11.5 | | | 11.5 | | | | | | | | | | | | | |
| | NONION E-230 | | 11.5 | | | 11.5 | | | | | | | | | | | | |
| | NONION S-40 | | | 11.5 | | | 11.5 | | | | | | | | | | | |
| B: Polymer | polyethyl vinyl ether PEVE | 42.3 | 42.3 | 42.3 | | | | | | | | | | | | | | |
| | polyalphaolefin Durasyn 164 | | | | 42.3 | 42.3 | 42.3 | | | | | 41.9 | | 31.9 | 32.4 | 32.4 | 31.9 | 42.3 |
| Polymer (non-B component) | Acrylic Copolymer 4 | | | | | | | 21.2 | 21.2 | | | | | | | | | |
| | methyltripropylene glycol MFTG | | | | | | | | | | 42.3 | | | | | | | |
| | fluorine-modified silicone FS1265-10000cst | | | | | | | | | 20.0 | | | | | | | | |
| | polydimethylsiloxane KF-96-50CS | | | | | | | | | | | 1.0 | | | | | | |
| C: Organic Solid Fine Particle | Fine particle OC-1 | 2.3 | 2.3 | 2.3 | 2.3 | 2.3 | 2.3 | 2.3 | 2.3 | 1.0 | 2.3 | 2.3 | | 1.7 | | | 1.7 | |
| Inorganic Solid Fine Particles (non-C component) | hydrophobic silica Sylophobic 100 | | | | | | | | | | | | 1.2 | 0.3 | 0.3 | 0.3 | 0.3 | |
| | hydrophobic silica Nipsil SS-30P | | | | | | | | | | | | 5.8 | 1.4 | 1.5 | 1.5 | 1.4 | |
| D: Organic Medium | Merveille 30 | **34.6** | 34.6 | 34.6 | 34.6 | 34.6 | 34.6 | 34.6 | 34.6 | 15.0 | 34.6 | 34.2 | | 26.0 | 26.5 | 44.9 | 44.2 | 36.9 |
| | Ethanol | 9.3 | 9.3 | 9.3 | 9.3 | 9.3 | 9.3 | 9.3 | 9.3 | 4.0 | 9.3 | 9.2 | | 7.0 | 7.1 | 12.1 | 11.8 | 9.3 |
| | Methyl propylene glycol | | | | | | | 21.1 | 21.1 | | | | | | | | | |
| | Methyl isobutyl ketone | | | | | | | | | 50.0 | | | | | | | | |
| | Cosmo Pure Spin G | | | | | | | | | | | | 93.0 | 23.0 | 23.4 | | | |

EP 4 552 718 A1

40

| Table 11 Compositions of Defoamer Samples (Comparative Examples C9 to C25 | | | | | | | | | | | | | | | | | | |
|---|---|---|---|---|---|---|---|---|---|---|---|---|---|---|---|---|---|---|
| Defoamer sample No. (Comparative Examples) | | C9 | C10 | C11 | C12 | C13 | C14 | C15 | C16 | C17 I | C18 I | C19 | C20 | C21 | C22 | C23 | C24 | C25 |
| Component Type | Component Name | Formulation amount / % | | | | | | | | | | | | | | | | |
| Total of defoamer compositions / % | | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 | 100.0 C |

(Preparation of Aqueous Paint Compositions and Test Solutions)

Two types of aqueous paints (Blank) were prepared according to the formulations shown in Tables 12 and 13. The aqueous paints shown in Table 12 are air-dry paints (paints that dry at room temperature) and the aqueous paints shown in Table 13 are baking paints (paints that undergo a curing reaction when heated).

[Table 12]

| Table 12 Air-drying paint formulation (Blank) | | | |
|---|---|---|---|
| Materials | Sources | Components | Formulation amount / % |
| Polysol AP-3900 | Resonac Corporation | acrylic silicone emulsion resins | 74.05 |
| deionized water | - | water | 23.93 |
| Kyowanol M | KH Neochem Co., Ltd. | 2,2,4-trimethyl penta ne-1,3-diol monoisobutyrate | 1.85 |
| 28% Ammonia water | - | ammonia water | 0.17 |
| Total | | | 100.00 |

[Table 13]

| Table 13 Baiking paint formulation (Blank) | | | |
|---|---|---|---|
| Materials | Sources | Components | Formulation amount / % |
| Watersol ACD-2001 | DIC Corporation | acrylic polyol dispersion | 44.30 |
| Cymel 327 | Allnex Japan Inc. | high imino methylated melamine resin | 8.20 |
| deionized water | - | water | 43.20 |
| BFG | Nippon Nyukazai CO., LTD. | propylene glycol mono n-butyl ether | 4.30 |
| Total | | | 100.00 |

<Preparation of Aqueous Paint Composition Containing Air-Drying Paint>

100 parts of the air-drying paint in Table 12 was weighed into a 300 mL tall glass beaker, to which 1 part each of the defoamers E1 to E44 and C1 to C24 obtained as described above was added dropwise in 1 minute while being stirred at 1,000 rpm to thereby obtain aqueous paint compositions of Examples 1 to 44 (Table 14) and Comparative Examples 1 to 24 (Table 15).

<Preparation of Test Solution for Evaluation Test of Air-Drying Paint Formulation>

The aqueous paint compositions of Examples 1 to 44 and Comparative examples 1 to 24 obtained as described above were dispersed at 2,000 rpm using a disperser with a φ5 cm Cowles blade (pre-high shear step). Regarding the dispersion time, dispersion liquid dispersed for 5 minutes (hereinafter, also referred to as "5-minute dispersion") and dispersion liquid dispersed for 20 minutes (hereinafter, also referred to as "20-minute dispersion") were prepared for each aqueous paint composition. The 5-minute dispersion and 20-minute dispersion performed in this step correspond to a short-term high-shear step and a long-term high-shear step, respectively. The higher the specific gravity recovery rate of the test solution dispersed for 20 minutes, the higher the shear resistance.

<Preparation of Aqueous Paint Composition Containing Baking Paint: for 5-Minute Dispersion>

100 parts of the baking paint in Table 13 was weighed into a 300 mL tall glass beaker, to which 1 part each of the defoamers E9, E11 to 13, E15, E18, E24, E27, E32, E33, E45 to E54 and C15, C20, C23, C25 obtained as described above was added dropwise in 1 minute while being stirred at 1,000 rpm to thereby obtain aqueous paint compositions (for 5-minute dispersion) of Examples 45 to 64 and Comparative examples 25 to 28 (Table 16).

<Preparation of Test Solution (5-minute dispersion) for Evaluation Test of Baking Paint Formulation>

The aqueous paint compositions of Examples 45 to 64 and Comparative examples 25 to 28 obtained as described above were dispersed for 5 minutes at 2,000 rpm using a disperser with a φ5 cm Cowles blade (pre-high shear step). The 5-minute dispersion performed in this step corresponds to a short-term high-shear step.

<Preparation of Aqueous Paint Composition Containing Baking Paint: for 20-Minute Dispersion>

100 parts of the baking paint in Table 13 was weighed into a 300 mL tall glass beaker, to which 1 part each of the defoamers E9, E11 to 13, E15, E18, E24, E27, E32, E33, E45 to E54 and C15, C20, C23, C25 obtained as described above was added dropwise in 1 minute while being stirred at 1,000 rpm to thereby obtain aqueous paint compositions (for 20-minute dispersion) of Examples 45 to 64 and Comparative examples 25 to 28 (Table 16).

<Preparation of Test Solution (20-minute dispersion) for Evaluation Test of Baking Paint Formulation>

The aqueous paint compositions of Examples 45 to 64 and Comparative examples 25 to 28 obtained as described above were dispersed for 20 minutes at 2,000 rpm using a disperser with a φ5 cm Cowles blade (pre-high shear step). The 20-minute dispersion performed in this step corresponds to a long-term high-shear step. The higher the specific gravity recovery rate of the test solution dispersed for 20 minutes, the higher the shear resistance.

The dispersion liquids (5-minute dispersions and 20-minute dispersions) of Examples 1 to 64 and Comparative examples 1 to 28 obtained in the above pre-high shear step were transferred into a 200 mL polycup, and defoamed for 2 minutes in a defoaming mode using a Thinky Mixer (Awatori Rentaro) ARE-310 (manufactured by Thinky Corporation), which were then left to stand at room temperature for 2 hours or more to thereby obtain test solutions of Examples and Comparative examples (defoaming step).

[Evaluation Method]

For the aqueous paint compositions of Examples 1 to 64 and Comparative examples 1 to 28 obtained as described above, evaluation tests were performed as below.

(Evaluation of Shear Resistance)

100 parts of the test solutions obtained in the defoaming step was transferred into a 200 mL polycup, dispersed for 5 minutes at 2,000 rpm using a disperser with a clover blade to cause foaming (foaming step). The dispersion performed in this step refers to a foaming step. The reason for separating the pre-high shear step and the foaming step is to ensure that the conditions in the foaming step are the same.

<Evaluation of Air-Drying Paint Formulation>

The specific gravity of the test solution at 1 minute and 5 minutes after foaming was measured using a specific gravity cup, and the percentage of the measured specific gravity to the specific gravity of the same test solution before foaming was calculated as the specific gravity recovery rate. The closer the specific gravity recovery rate is to 100%, the higher the defoaming properties. The 1 minute and 5 minutes used to calculate the specific gravity recovery rate are both the time required for specific gravity recovery, and the specific gravity recovery rate after 1 minute was used as an index mainly related to foam-suppression properties and the specific gravity recovery rate after 5 minutes was used as an index mainly related to foam-breaking properties.

Specific gravity recovery rate (after 1 minute) = (specific gravity 1 minute after foaming of test solution)/(specific gravity before foaming of test solution) $\times$ 100 [%]

Specific gravity recovery rate (after 5 minutes) = (specific gravity 5 minutes after foaming of test solution)/(specific gravity before foaming of test solution) $\times$ 100 [%]

Evaluation of shear resistance was performed according to the following criteria. When both the specific gravity recovery rate (1 minute) and the specific gravity recovery rate (5 minutes) of the test solution dispersed for 5 minutes were C or higher, and at least one of the specific gravity recovery rate (1 minute) and the specific gravity recovery rate (5 minutes) of the test solution dispersed for 20 minutes was C or higher, it is determined that the test solution had the shear resistance required in the present invention.

<Evaluation Criteria for Specific Gravity Recovery Rate (1 minute)>

Specific gravity recovery rate (1 minute) [%] 95% or greater: Very good (A)
Specific gravity recovery rate (1 minute) [%] 85% or greater and less than 95%: Good (B)
Specific gravity recovery rate (1 minute) [%] 75% or greater and less than 85%: Acceptable (C)
Specific gravity recovery rate (1 minute) [%] less than 75%: Poor defoaming effect (D) <Evaluation Criteria for Specific Gravity Recovery Rate (5 minutes)>
Specific gravity recovery rate (5 minutes) [%] 98% or greater: Very good (A)
Specific gravity recovery rate (5 minutes) [%] 90% or greater and less than 98%: Good (B)
Specific gravity recovery rate (5 minutes) [%] 80% or greater and less than 90%: Acceptable (C)
Specific gravity recovery rate (5 minutes) [%] less than 80%: Poor defoaming effect (D)

<Evaluation of Baking Paint>

The specific gravity of the test solution at 1 minute and 5 minutes after foaming was measured using a specific gravity cup, and the percentage of the measured specific gravity to the specific gravity of the same test solution before foaming was calculated as the specific gravity recovery rate. The closer the specific gravity recovery rate is to 100%, the higher the defoaming properties. The 1 minute and 5 minutes used to calculate the specific gravity recovery rate are both the time required for specific gravity recovery, and the specific gravity recovery rate after 1 minute was used as an index mainly related to foam-suppression properties and the specific gravity recovery rate after 5 minutes was used as an index mainly related to foam-breaking properties.

Specific gravity recovery rate (after 1 minute) = (specific gravity 1 minute after foaming of test solution)/(specific gravity before foaming of test solution) × 100 [%] Specific gravity recovery rate (after 5 minutes) = (specific gravity 5 minutes after foaming of test solution)/(specific gravity before foaming of test solution) × 100 [%]

Evaluation of shear resistance was performed according to the following criteria. When both the specific gravity recovery rate (1 minute) and the specific gravity recovery rate (5 minutes) of the test solution dispersed for 5 minutes were C or higher, and at least one of the specific gravity recovery rate (1 minute) and the specific gravity recovery rate (5 minutes) of the test solution dispersed for 20 minutes was C or higher, it is determined that the test solution had the shear resistance required in the present invention.

<Evaluation Criteria for Specific Gravity Recovery Rate (1 minute)>

Specific gravity recovery rate (1 minute) [%] 99.5% or greater: Very good (A)
Specific gravity recovery rate (1 minute) [%] 95% or greater and less than 99.5%: Good (B)
Specific gravity recovery rate (1 minute) [%] 90% or greater and less than 95%: Acceptable (C)
Specific gravity recovery rate (1 minute) [%] less than 90%: Poor defoaming effect (D) <Evaluation Criteria for Specific Gravity Recovery Rate (5 minutes)>
Specific gravity recovery rate (5 minutes) [%] 99.5% or greater: Very good (A)
Specific gravity recovery rate (5 minutes) [%] 95% or greater and less than 99.5%: Good (B)
Specific gravity recovery rate (5 minutes) [%] 90% or greater and less than 95%: Acceptable (C)
Specific gravity recovery rate (5 minutes) [%] less than 90%: Poor defoaming effect (D)

The evaluation criteria for shear resistance of the baking paint formulation using ACD-2001 and the air-drying paint formulation using AP-3900 are different since the defoaming properties and specific gravity of paints with no defoamer added (Blank) vary depending on the paint formulation.

(Evaluation of Coating Appearance)

For the test solutions with air-drying paint formulation and baking paint formulation were evaluated for the appearance of coating films, which were dried and baked after application to glass plates.

<Evaluation of Air-Drying Paint Formulation>

The test solution obtained in the defoaming step was applied to a glass plate using a bar coater #42, dried at room temperature for 1 day, and the appearance of the coating film was evaluated. Evaluation of coating appearance was performed according to the following criteria.

Excellent: No fish-eye-like cissing found on coating film
Good: 3 or less craterings found on coating film
Fair: 3 or less fish-eye-like cissings found on coating film
Poor: More than 3 fish-eye-like cissings or occurrence of significant seeding found on coating film

<Evaluation of Baking Paint>

The test solution obtained in the defoaming step was applied to a glass plate using a 200 μm applicator, and a film was formed under the following conditions: setting: room temperature for 5 minutes, pre-heating: 80°C for 5 minutes, and baking: 140°C for 30 minutes, and the appearance of the coating film was evaluated. Evaluation of coating appearance was performed according to the following criteria.

Excellent: No fish-eye-like cissing found on coating film
Good: 3 or less craterings found on coating film
Fair: 3 or less fish-eye-like cissings found on coating film
Poor: More than 3 fish-eye-like cissings or occurrence of significant seeding found on coating film

(Evaluation of Overcoatability)

The overcoatability was determined by whether the aqueous paint composition contained a silicone compound ("presence of silicone") to determine whether there was a risk of topcoat inhibition.

No risk of topcoat inhibition by silicone: No (does not contain silicone compounds)
Risk of topcoat inhibition by silicone: Yes (contains silicone compounds)

[Evaluation Results]

Tables 14 to 16 show the results of evaluating the performance as described above. For Blank (sample with no defoamer added), the data of the specific gravity recovery rate (1 minute) and the specific gravity recovery rate (5 minutes) listed in the column "5-minute dispersion" in Tables 15 and 16 are the results of foaming, in the foaming step, a sample that has not undergone a pre-high shear step, and measuring the specific gravity. Further, when a 20-minute pre-high shear step was performed on Blank sample, significant foaming occurred in the pre-high shear step, and therefore, the shear resistance evaluation test was discontinued.

[Table 14]

| Table 14 Evaluation results of air-drying paint formulation (Examples 1 to 44) | | | | | | | |
|---|---|---|---|---|---|---|---|
| | Defoamer sample No. | 5-minute dispersion | | 20-minute dispersion | | Coating appearance | Presence of silicone |
| | | Specific gravity recovery rate (1 min) | Specific gravity recovery rate (5 min) | Specific gravity recovery rate (1 min) | Specific gravity recovery rate (5 min) | | |
| Ex. 1 | E1 | A | A | A | A | Excellent | No |
| Ex. 2 | E2 | A | A | B | A | Excellent | No |
| Ex. 3 | E3 | A | A | A | A | Excellent | No |

(continued)

| | Defoamer sample No. | 5-minute dispersion | | 20-minute dispersion | | Coating appearance | Presence of silicone |
|---|---|---|---|---|---|---|---|
| | | Specific gravity recovery rate (1 min) | Specific gravity recovery rate (5 min) | Specific gravity recovery rate (1 min) | Specific gravity recovery rate (5 min) | | |
| Ex. 4 | E4 | A | A | C | B | Excellent | No |
| Ex. 5 | E5 | A | A | C | B | Excellent | No |
| Ex. 6 | E6 | A | A | C | B | Excellent | No |
| Ex. 7 | E7 | A | A | B | A | Excellent | No |
| Ex. 8 | E8 | A | A | A | A | Excellent | No |
| Ex. 9 | E9 | A | A | A | A | Fair | No |
| Ex. 10 | E10 | A | A | A | A | Excellent | No |
| Ex. 11 | E11 | A | A | A | A | Excellent | No |
| Ex. 12 | E12 | A | A | A | A | Fair | No |
| Ex. 13 | E13 | A | A | A | A | Excellent | No |
| Ex. 14 | E14 | A | A | A | A | Excellent | No |
| Ex. 15 | E15 | A | A | A | A | Excellent | No |
| Ex. 16 | E16 | A | A | A | A | Good | No |
| Ex. 17 | E17 | A | A | A | A | Excellent | No |
| Ex. 18 | E18 | A | A | A | A | Excellent | No |
| Ex. 19 | E19 | A | A | C | C | Fair | No |
| Ex. 20 | E20 | A | A | B | B | Excellent | No |
| Ex. 21 | E21 | A | A | A | A | Excellent | No |
| Ex. 22 | E22 | A | A | B | A | Excellent | No |
| Ex. 23 | E23 | A | A | A | A | Excellent | No |
| Ex. 24 | E24 | A | A | A | A | Excellent | No |
| Ex. 25 | E25 | A | A | A | A | Excellent | No |
| Ex. 26 | E26 | A | A | A | A | Excellent | No |
| Ex. 27 | E27 | A | A | A | A | Excellent | No |
| Ex. 28 | E28 | A | A | A | A | Fair | No |
| Ex. 29 | E29 | A | A | A | A | Excellent | No |
| Ex. 30 | E30 | A | A | A | A | Excellent | No |
| Ex. 31 | E31 | A | A | A | A | Excellent | No |
| Ex. 32 | E32 | A | A | A | A | Excellent | No |
| Ex. 33 | E33 | A | A | B | B | Excellent | No |
| Ex. 34 | E34 | C | B | D | C | Excellent | No |
| Ex. 35 | E35 | A | A | C | B | Fair | No |
| Ex. 36 | E36 | A | A | A | A | Excellent | No |
| Ex. 37 | E37 | A | A | A | A | Excellent | No |
| Ex. 38 | E38 | A | A | C | B | Excellent | No |

(continued)

| Table 14 Evaluation results of air-drying paint formulation (Examples 1 to 44) | | | | | | | |
|---|---|---|---|---|---|---|---|
| | Defoamer sample No. | 5-minute dispersion | | 20-minute dispersion | | Coating appearance | Presence of silicone |
| | | Specific gravity recovery rate (1 min) | Specific gravity recovery rate (5 min) | Specific gravity recovery rate (1 min) | Specific gravity recovery rate (5 min) | | |
| Ex. 39 | E39 | A | A | C | B | Excellent | No |
| Ex. 40 | E40 | A | A | C | B | Excellent | No |
| Ex. 41 | E41 | A | A | C | B | Excellent | No |
| Ex. 42 | E42 | A | A | C | A | Excellent | No |
| Ex. 43 | E43 | A | A | D | C | Excellent | No |
| Ex. 44 | E44 | A | A | D | C | Excellent | No |

[Table 15]

| Table 15 Evaluation results of air-drying paint formulation (Comparative examples 1 to 24, Blank) | | | | | | | |
|---|---|---|---|---|---|---|---|
| | Defoamer sample No. | 5-minute dispersion | | 20-minute dispersion | | Coating appearance | Presence of silicone |
| | | Specific gravity recovery rate (1 min) | Specific gravity recovery rate (5 min) | Specific gravity recovery rate (1 min) | Specific gravity recovery rate (5 min) | | |
| Comp. Ex. 1 | C1 | D | D | D | D | Excellent | No |
| Comp. Ex. 2 | C2 | D | C | D | D | Excellent | No |
| Comp. Ex. 3 | C3 | D | C | D | D | Excellent | No |
| Comp. Ex. 4 | C4 | D | D | D | D | Excellent | No |
| Comp. Ex. 5 | C5 | D | D | D | C | Excellent | No |
| Comp. Ex. 6 | C6 | D | D | D | D | Excellent | No |
| Comp. Ex. 7 | C7 | A | A | A | A | Poor | Yes |
| Comp. Ex. 8 | C8 | A | A | C | B | Poor | No |

(continued)

| | Defoamer sample No. | 5-minute dispersion | | 20-minute dispersion | | Coating appearance | Presence of silicone |
|---|---|---|---|---|---|---|---|
| | | Specific gravity recovery rate (1 min) | Specific gravity recovery rate (5 min) | Specific gravity recovery rate (1 min) | Specific gravity recovery rate (5 min) | | |
| Comp. Ex. 9 | C9 | | | | | | No |
| Comp. Ex. 10 | C10 | | | | | | No |
| Comp. Ex. 11 | C11 | Defoamer composition was separated, and further testing was discontinued. | | | | | No |
| Comp. Ex. 12 | C12 | | | | | | No |
| **Comp. Ex. 13** | C13 | | | | | | No |
| Comp. Ex. 14 | C14 | | | | | | No |
| Comp. Ex. 15 | C15 | B | B | D | A | Poor | No |
| Comp. Ex. 16 | C16 | D | C | D | C | Excellent | No |
| Comp. Ex. 17 | C17 | A | A | A | A | Poor | Yes |
| Comp. Ex. 18 | C18 | D | C | D | C | Excellent | No |
| Comp. Ex. 19 | C19 | A | A | A | A | Poor | Yes |
| Comp. Ex. 20 | C20 | A | A | B | B | Poor | No |
| Comp. Ex. 21 | C21 | A | A | A | A | Poor | No |
| Comp. Ex. 22 | C22 | A | A | B | B | Poor | No |
| Comp. Ex. 23 | C23 | A | A | A | A | Poor | No |
| Comp. Ex. 24 | C24 | A | A | A | A | Poor | No |
| Blank | Defoamer not added | D* | C* | - | - | Excellent | No |
| * Evaluated without performing pre-high shear step | | | | | | | |

Table 15 Evaluation results of air-drying paint formulation (Comparative examples 1 to 24, Blank)

[Table 16]

Table 16 Evaluation results of baking paint formulation (Examples 45 to 64, Comparative examples 25 to 28, Blank)

| | Defoamer sample No. | 5-minute dispersion | | 20-minute dispersion | | Coating appearance | Presence of silicone |
|---|---|---|---|---|---|---|---|
| | | Specific gravity recovery rate (1 min) | Specific gravity recovery rate (5 min) | Specific gravity recovery rate (1 min) | Specific gravity recovery rate (5 min) | | |
| Ex. 45 | E9 | A | A | A | A | Fair | No |
| Ex. 46 | E11 | A | A | A | A | Excellent | No |
| Ex. 47 | E12 | A | A | B | A | Excellent | No |
| Ex. 48 | E13 | A | A | A | A | Excellent | No |
| Ex. 49 | E15 | A | A | A | A | Excellent | No |
| Ex. 50 | E18 | B | A | B | A | Excellent | No |
| Ex. 51 | E24 | A | A | A | A | Excellent | No |
| Ex. 52 | E27 | B | A | B | B | Excellent | No |
| Ex. 53 | E32 | A | A | A | A | Excellent | No |
| Ex. 54 | E33 | A | A | A | A | Excellent | No |
| Ex. 55 | E45 | C | B | C | B | Excellent | No |
| Ex. 56 | E46 | B | A | A | A | Excellent | No |
| Ex. 57 | E47 | A | A | B | A | Excellent | No |
| Ex. 58 | E48 | C | B | C | C | Excellent | No |
| Ex. 59 | E49 | B | A | B | A | Excellent | No |
| Ex. 60 | E50 | A | A | B | A | Excellent | No |
| Ex. 61 | E51 | A | A | A | A | Excellent | No |
| Ex. 62 | E52 | A | A | A | A | Excellent | No |
| Ex. 63 | E53 | A | A | A | A | Excellent | No |
| Ex. 64 | E54 | B | A | B | A | Excellent | No |
| Comp. Ex. 25 | C15 | D | B | D | C | Excellent | No |
| Comp. Ex. 26 | C20 | B | A | B | B | Poor | No |
| Comp. Ex. 27 | C23 | B | A | B | A | Poor | No |
| Comp. Ex. 28 | C25 | D | C | D | C | Excellent | No |
| Blank | Defoamer not added | D* | C* | - | - | Excellent | No |
| * Evaluated without performing pre-high shear step | | | | | | | |

The aqueous paint compositions of Examples 1 to 64 had the performance required in the present invention in terms of all of the evaluations of shear resistance, coating appearance and overcoatability.

Comparison of Examples 1, 9, 12 and 16 shows that, when the HLB of the nonionic surfactant (A) is 2 or greater, the coating appearance tends to be particularly excellent.

Comparison of Examples 1, 20 and 23 shows that, when the SP value of the polymer (B) is 9.5 or less, the shear resistance is particularly excellent.

Comparison of Examples 1, 21, 27 and 31 shows that, when the weight-average molecular weight of the polymer (B) is 300,000 or less, the shear resistance and coating appearance are particularly excellent.

Comparison of Examples 1, 34, 36 and 38 shows that, when the aspect ratio of the organic solid fine particles (C) is within the range of 2.0 to 11, the shear resistance is particularly excellent.

On the other hand, Comparative examples 1 to 3 and 25, which did not contain the organic solid fine particles (C) as the defoamer component, and Comparative examples 4 to 6, which did not contain the nonionic surfactant (A) and the polymer (B), had poor shear resistance. In the aqueous paint composition of Comparative example 3, separation of the defoamer occurred. Comparative example 25 is an example in which the organic solid fine particles (C) were replaced with Merveille 30.

Further, Comparative examples 7, 17 and 19, which contained a silicone-based compound as the defoamer component, and Comparative examples 8 and 20 to 24, which contained hydrophobic silica, had poor coating appearance. In addition, Comparative examples 7, 17 and 19, which contained a silicone-based compound, had a risk of topcoat inhibition due to containing the silicone compound.

In Comparative examples 9 to 14, which contained a surfactant (non-A component) having the HLB greater than 16 as the nonionic surfactant, the defoamer composition (defoamer sample) was separated, and further testing was discontinued.

Further, Comparative examples 15 to 19, which contained, as the polymer, a polymer (non-B component) that does not fall under the polymer (B) of the present invention, were inferior in at least one of shear resistance and coating appearance. In particular, Comparative examples 17 and 19, which contained a silicone compound as the polymer, were excellent in shear resistance but had poor coating appearance.

Further, Comparative examples 20 to 24, which contained inorganic solid fine particles (non-C component) as the solid fine particles, were excellent in shear resistance but had poor coating appearance.

## Claims

1. A defoamer composition for aqueous paints, the defoamer composition containing:

    a nonionic surfactant (A) having at least one hydrophilic moiety selected from the group consisting of an ethylene glycol moiety, a polyethylene glycol moiety and a polyhydric alcohol moiety in a molecule, the nonionic surfactant (A) having an HLB of 1 to 16;
    a polymer (B) which does not have the hydrophilic moiety in a molecule, the polymer (B) having an SP value of 7.5 to 12 and a weight-average molecular weight of 400 to 1,000,000; and
    organic solid fine particles (C) which are in a solid state in the defoamer composition at 25°C.

2. The defoamer composition according to claim 1, wherein
    the nonionic surfactant (A) is one or more selected from the group consisting of ethylene glycol aliphatic ethers, polyoxyalkylene aliphatic ethers, polyoxyalkylene aromatic ethers, polyoxyalkylene fatty acid esters, alkylene oxide addition derivatives of castor oil, alkylene oxide addition derivatives of hydrogenated castor oil, polyoxyalkylene polyhydric alcohol ethers, polyhydric alcohol fatty acid esters, alkylene oxide addition derivatives of polyhydric alcohol fatty acid esters, polyoxyalkylene alkyl amides, acetylene glycol and derivatives thereof, alkylene oxide addition derivatives of acetylene glycol, polyoxyethylene-polyoxypropylene block copolymers and polyoxyethylene-polyoxypropylene-polyoxyethylene block copolymers.

3. The defoamer composition according to claim 1, wherein
    the polymer (B) is one or more polymers selected from the group consisting of polyvinyl alkyl ethers, polybutadiene, polybutene, polyisoprene, polyalphaolefins, polyalkyl (meth)acrylates, copolymers of dibasic acid esters, poly(fatty acid vinyl esters), copolymers of alkyl (meth)acrylates and fatty acid vinyl esters, and polyalkylene glycol derivatives (the polyalkylene glycol derivatives not having any of the ethylene glycol moiety, the polyethylene glycol moiety and the polyhydric alcohol moiety, and having a weight-average molecular weight of 400 to 1,000,000).

4. The defoamer composition according to claim 1, wherein
    the organic solid fine particles (C) are one or more solid fine particles selected from the group consisting of amide, urea, polyethylene, polyethylene oxide, acid-modified polyethylene and hydrogenated castor oil.

5. The defoamer composition according to claim 4, wherein
    the amide is a fatty acid diamide obtainable by reacting fatty acids selected from the group consisting of alkyl fatty acids and hydroxy fatty acids and containing at least one hydroxy fatty acid with diamines containing one or more diamines selected from the group consisting of alkylenediamines having 2 to 6 carbon atoms and m-xylylenediamines.

6.  The defoamer composition according to claim 1, wherein
    the organic solid fine particles (C) have a crystal aspect ratio of 1.1 to 100.

7.  The defoamer composition according to claim 1, wherein

    further containing an organic medium (D) which does not have the hydrophilic moiety in a molecule, and which is liquid at 25°C and other than water,
    the organic medium (D) having a weight-average molecular weight of less than 400.

8.  The defoamer composition according to claim 7, wherein
    the organic medium (D) is one or more selected from the group consisting of hydrocarbon oils, alcohols, glycol ethers and glycol esters.

9.  The defoamer composition according to claim 1, wherein
    the defoamer composition does not contain a silicone compound.

10. An aqueous paint composition comprising:

    the defoamer composition according to any one of claims 1 to 9; and
    an aqueous resin.

11. An article coated with a coating agent containing the defoamer composition according to any one of claims 1 to 9.

## INTERNATIONAL SEARCH REPORT

| International application No. |
|---|
| **PCT/JP2023/025417** |

### A. CLASSIFICATION OF SUBJECT MATTER

***B01D 19/04***(2006.01)i; ***C09D 201/00***(2006.01)i; ***C09D 7/63***(2018.01)i; ***C09D 7/65***(2018.01)i
FI:    C09D201/00; C09D7/65; C09D7/63; B01D19/04

According to International Patent Classification (IPC) or to both national classification and IPC

### B. FIELDS SEARCHED

Minimum documentation searched (classification system followed by classification symbols)

B01D19/04; C09D201/00; C09D7/63; C09D7/65

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2010/087196 A1 (SAN NOPCO LTD.) 05 August 2010 (2010-08-05)<br>claims 1-11 | 1-11 |
| A | WO 2016/080475 A1 (SAN NOPCO LTD.) 26 May 2016 (2016-05-26)<br>claims 1-6 | 1-11 |
| A | JP 2014-83466 A (SAN NOPCO LTD.) 12 May 2014 (2014-05-12)<br>claims 1-7 | 1-11 |
| A | JP 2011-218329 A (SAN NOPCO LTD.) 04 November 2011 (2011-11-04)<br>claims 1-9 | 1-11 |
| A | JP 2013-506041 A (CYTEC AUSTRIA GMBH) 21 February 2013 (2013-02-21)<br>claims 1-12 | 1-11 |
| A | JP 4-502730 A (HENKEL KOMMANDITGESELLSCHAFT AUF AKTIEN) 21 May 1992<br>(1992-05-21)<br>claims 1-7 | 1-11 |

☑ Further documents are listed in the continuation of Box C.      ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 August 2023** | **29 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2023/025417** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 1-210005 A (BASF AG) 23 August 1989 (1989-08-23)<br>claims 1-3 | 1-11 |
| A | JP 52-97380 A (NALCO CHEMICAL CO) 16 August 1977 (1977-08-16)<br>claims 1-8 | 1-11 |

Form PCT/ISA/210 (second sheet) (January 2015)

**INTERNATIONAL SEARCH REPORT**
Information on patent family members

International application No.

**PCT/JP2023/025417**

| Patent document cited in search report | | | Publication date (day/month/year) | Patent family member(s) | | | Publication date (day/month/year) |
|---|---|---|---|---|---|---|---|
| WO | 2010/087196 | A1 | 05 August 2010 | US claims | 2011/0281985 | A1 | |
| | | | | EP | 2392392 | A1 | |
| | | | | CN | 102300612 | A | |
| WO | 2016/080475 | A1 | 26 May 2016 | US claims | 2017/0312657 | A | |
| | | | | CN | 106999802 | A | |
| JP | 2014-83466 | A | 12 May 2014 | (Family: none) | | | |
| JP | 2011-218329 | A | 04 November 2011 | (Family: none) | | | |
| JP | 2013-506041 | A | 21 February 2013 | US claims | 9017471 | B2 | |
| | | | | WO | 2011/036039 | A1 | |
| | | | | EP | 2301645 | A1 | |
| | | | | CN | 102686291 | A | |
| JP | 4-502730 | A | 21 May 1992 | WO claims | 1990/007967 | A1 | |
| | | | | EP | 453448 | A | |
| | | | | DE | 3901045 | A1 | |
| JP | 1-210005 | A | 23 August 1989 | US claims | 4976888 | A | |
| | | | | EP | 322830 | A2 | |
| | | | | DE | 3744593 | A | |
| | | | | AU | 2762688 | A | |
| | | | | FI | 885971 | A | |
| JP | 52-97380 | A | 16 August 1977 | US claims | 3990905 | A | |
| | | | | DE | 2654739 | A | |
| | | | | FR | 2340122 | A | |
| | | | | AU | 2026376 | A | |
| | | | | CA | 1075995 | A | |

Form PCT/ISA/210 (patent family annex) (January 2015)

**REFERENCES CITED IN THE DESCRIPTION**

**Patent documents cited in the description**

- JP 4526584 B
- JP 2001212403 A

- JP H016803 A